# EUROPEAN PATENT APPLICATION

(11) **EP 4 541 245 A1**
(43) Date of publication of application: **23.04.2025**
(21) Application number: 23857511.2
(22) Date of filing: 21.06.2023
(51) Int. Cl.: A47L 9/28, A47L 9/00, A47L 5/26, G01L 19/08, G01R 19/00

(54) **CLEANER CAPABLE OF SELF-DIAGNOSIS AND SELF-DIAGNOSIS METHOD OF CLEANER**

(30) Priority: 24.08.2022 KR 20220106342; 26.10.2022 KR 20220139671
(71) Applicant: Samsung Electronics Co., Ltd., Suwon-si, Gyeonggi-do 16677 (KR)
(72) Inventor: CHO, Jeonghee, Suwon-si, Gyeonggi-do 16677 (KR); KIM, Seehyun, Suwon-si, Gyeonggi-do 16677 (KR); KANG, Hyunkoo, Suwon-si, Gyeonggi-do 16677 (KR); KIM, Juhyuk, Suwon-si, Gyeonggi-do 16677 (KR); PARK, Sanghyuk, Suwon-si, Gyeonggi-do 16677 (KR); LEE, Seongu, Suwon-si, Gyeonggi-do 16677 (KR); LEE, Yeongju, Suwon-si, Gyeonggi-do 16677 (KR); CHOI, Sanghwa, Suwon-si, Gyeonggi-do 16677 (KR); CHOI, Jiwon, Suwon-si, Gyeonggi-do 16677 (KR)
(74) Representative: Walaski, Jan Filip
(86) International application number: PCT/KR2023/008626
(87) International publication number: WO 2024/043473

(57) **Abstract**

The present disclosure relates to self-diagnosis of a vacuum cleaner including a cleaner body and a brush device connected to the cleaner body. The cleaner body may be configured to perform self-diagnosis on each element of the vacuum cleaner by comparing a flow path pressure value of the vacuum cleaner which is detected by using a pressure sensor mounted to a portion of a suction duct and data related to a load of a brush device with reference values stored in a memory, and to output a result of the self-diagnosis.

## Description

### Technical Field

An embodiment of the present disclosure relates to a vacuum cleaner capable of performing self-diagnosis, and a self-diagnosis method of the vacuum cleaner.

### Background Art

A vacuum cleaner is an electronic device capable of sucking up air including foreign substances via a suction force generated by a suction motor, and separating the sucked-up foreign substances from the air to collect them.

However, it is difficult for a user to determine whether a state of the vacuum cleaner is an optimal operation state. For example, the user may not recognize that the vacuum cleaner is in an overheated state. When the vacuum cleaner overheats, the suction motor included in the vacuum cleaner may be damaged. When the suction motor is damaged, the user has to repair the vacuum cleaner.

Also, when an abnormal symptom of the vacuum cleaner occurs, the user has to find a cause of the abnormal symptom by referring to a manual or has to ask the manufacturer. For example, when the vacuum cleaner is in the overheated state, the user has to refer to the manual to find a cause of the overheating in the vacuum cleaner or ask the manufacturer.

### Disclosure

### Technical Solution

According to an embodiment of the present disclosure, a vacuum cleaner may include a cleaner body and a brush device connected to the cleaner body. The cleaner body included in the vacuum cleaner may include a user interface configured to output diagnosis result information regarding a state of the vacuum cleaner. The cleaner body may include a memory storing one or more instructions, and storing data for diagnosing the state of the vacuum cleaner. The cleaner body may include a pressure sensor mounted to a portion of a suction duct included in the cleaner body. The cleaner body may include at least one processor. The at least one processor may be configured to execute the one or more instructions stored in the memory to determine whether a state of the vacuum cleaner is a no-load state. The at least one processor may be configured to execute the one or more instructions to detect a pressure value in a flow path of the vacuum cleaner, based on the pressure sensor, when the state of the vacuum cleaner is determined as the no-load state. The at least one processor may be configured to detect data related to a load of the brush device. The at least one processor may be configured to compare the detected pressure value in the flow path of the vacuum cleaner and the detected data related to the load of the brush device with reference values stored in the memory. The at least one processor may be configured to diagnose the state of the vacuum cleaner, based on a result of the comparing. The at least one processor may be configured to output the diagnosis result information about the diagnosing via the user interface.

According to an embodiment of the present disclosure, a self-diagnosis method of a vacuum cleaner may include determining, by at least one processor of a cleaner body, whether a state of the vacuum cleaner is a no-load state. According to an embodiment of the present disclosure, the method may include, when the state of the vacuum cleaner is determined as the no-load state, detecting, by the at least one processor, a pressure value in a flow path of the vacuum cleaner, based on a pressure sensor mounted to a portion of a suction duct of the cleaner body. According to an embodiment of the present disclosure, the method may include detecting, by the at least one processor, data related to a load of the brush device. According to an embodiment of the present disclosure, the method may include comparing, by the at least one processor, the detected pressure value in the flow path of the vacuum cleaner and the data related to the load of the brush device with reference values stored in a memory included in the cleaner body. According to an embodiment of the present disclosure, the method may include diagnosing, by the at least one processor, the state of the vacuum cleaner, based on a result of the comparing. According to an embodiment of the present disclosure, the method may include outputting, by the at least one processor, diagnosis result information about the diagnosing via a user interface included in the cleaner body.

### Description of Drawings

FIG. 1A is a diagram for describing a vacuum cleaner according to an embodiment of the present disclosure.
FIG. 1B shows an example for describing a no-load state of a vacuum cleaner according to an embodiment of the present disclosure.
FIG. 1C shows an example for describing a no-load state of a vacuum cleaner while the vacuum cleaner is being used, according to an embodiment of the present disclosure.
FIG. 2 is a diagram for describing a cleaner body according to an embodiment of the present disclosure.
FIG. 3 is a block diagram of functions of a cleaner body according to an embodiment of the present disclosure.
FIG. 4 shows an example of a self-diagnosis table for a vacuum cleaner, based on a current value of a motor of a brush device and a flow path pressure value of the vacuum cleaner, according to an embodiment of the present disclosure.
FIG. 5 shows an example of a self-diagnosis table for a vacuum cleaner, based on a current value of a motor of a brush device, according to an embodiment of the present disclosure.
FIG. 6 shows an example of a self-diagnosis table for a vacuum cleaner, based on a flow path pressure value of the vacuum cleaner, according to an embodiment of the present disclosure.
FIG. 7 shows an example of self-diagnosis types and priorities, according to an embodiment of the present disclosure.
FIG. 8 is a table for describing that a reference value for self-diagnosis with respect to a flow path pressure value of a vacuum cleaner and a reference value for self-diagnosis with respect to a current value of a motor included in a brush device are differently set according to types of the brush device, according to an embodiment of the present disclosure.
FIG. 9 shows an example of relations between self-diagnosis items of a vacuum cleaner, self-diagnosis result information, a self-diagnosis standard, state examples of check items, and user action guides.
FIG. 10 is a diagram for describing a brush device, according to an embodiment of the present disclosure.
FIG. 11 illustrates an example of self-diagnosis result information output via a user interface, according to an embodiment of the present disclosure.
FIG. 12 illustrates an example of self-diagnosis result information output via a user interface, according to an embodiment of the present disclosure.
FIG. 13 is a block diagram of functions of a station, according to an embodiment of the present disclosure.
FIG. 14 is an operation flowchart of a self-diagnosis method of a vacuum cleaner, according to an embodiment of the present disclosure.
FIG. 15 is a flowchart of an operation of a vacuum cleaner which includes a self-diagnosis method performed when the vacuum cleaner is installed, according to an embodiment of the present disclosure.
FIG. 16 is a flowchart of an operation of a vacuum cleaner which includes a self-diagnosis method performed during the operation of the vacuum cleaner, according to an embodiment of the present disclosure.

### Mode for Invention

The terms used in the present disclosure will be briefly defined, and an embodiment of the present disclosure will be described in detail.

All terms including descriptive or technical terms which are used in the present disclosure should be construed as having meanings that are obvious to one of ordinary skill in the art. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the present disclosure. Therefore, the terms used in the present disclosure should not be interpreted based on only their names but have to be defined based on the meaning of the terms together with the descriptions throughout the specification.

Throughout the present disclosure, the expression "at least one of a, b or c" indicates only a, only b, only c, both a and b, both a and c, both b and c, all of a, b, and c, or variations thereof.

In the present disclosure, the term "and/or" includes any and all combinations of one or more of the associated listed items. In the present disclosure, the terms "first," "second," etc. may be only used to distinguish one element from another and do not limit the elements in any other aspects (e.g., importance or order).

Throughout the present disclosure, when a part "includes" or "comprises" an element, unless there is a particular description contrary thereto, the part may further include other elements, not excluding the other elements.

As used in the present disclosure, the term "unit" or "module" denotes an entity for performing at least one function or operation, and may be implemented as hardware such as a field programmable gate array (FPGA) or an application specific integrated circuit (ASIC), software, or a combination of hardware and software. The term "...unit" used in an embodiment of the present disclosure does not mean to be limited to software or hardware. The "...unit used in an embodiment of the present disclosure may be configured to be in an addressable storage medium or configured to operate one or more processors. In an embodiment of the present disclosure, the "... unit" may include elements, such as software elements, object-oriented software elements, class elements, and task elements, processes, functions, attributes, procedures, subroutines, segments of program code, drivers, firmware, microcode, circuitry, data, databases, data structures, tables, arrays, and variables. The functionality provided in particular elements and "...units" may be combined into fewer elements and "...units" or may be further separated into additional elements and "... units". Also, in an embodiment, the "...unit" may include one or more processors.

In an embodiment of the present disclosure, each block of flowchart illustrations, and combinations of blocks in the flowchart illustrations, may be implemented by computer program instructions. The computer program instructions may be provided to a processor of a general-purpose computer, special purpose computer, or other programmable data processing apparatus. The instructions, which are executed by the processor of the computer or other programmable data processing apparatus, generate means for performing functions specified in the flowchart block(s). The computer program instructions may also be stored in a computer-executable or computer-readable memory that may direct the computer or other programmable data processing apparatus to function in a particular manner. The instructions stored in the computer-executable or computer-readable memory produce an article of manufacture including instruction means that perform the functions specified in the flowchart block(s). The computer program instructions may also be loaded onto the computer or other programmable data processing apparatus.

In addition, each block of the flowchart illustrations may represent a module, segment, or portion of code, which includes one or more executable instructions for performing specified logical function(s). In an embodiment of the present disclosure, it should also be noted that the functions noted in the blocks may occur out of the order. For example, two blocks shown in succession may in fact be executed substantially concurrently or the blocks may sometimes be executed in the reverse order, depending upon the functionality involved.

Hereinafter, the present disclosure will now be described more fully with reference to the accompanying drawings for one of ordinary skill in the art to be able to perform the embodiments of the present disclosure without any difficulty. However, an embodiment of the present disclosure may be embodied in many different forms and should not be construed as being limited to the embodiments set forth herein. In addition, portions irrelevant to the description will be omitted in the drawings for a clear description of an embodiment of the present disclosure, and like reference numerals will denote like elements throughout the present disclosure.

According to an embodiment of the present disclosure, a vacuum cleaner performing self-diagnosis of each element in a no-load state, and providing self-diagnosis result information, and a self-diagnosis method of the vacuum cleaner may be provided.

Accordingly, a user may easily recognize whether a state of the vacuum cleaner is an optimal operation state. The user may correctly identify a location or an element requesting a check, based on the self-diagnosis result information of the vacuum cleaner, and may perform an appropriate action. Accordingly, the user may save time and costs for maintenance and repair for the vacuum cleaner. Also, as damage to each element included in the vacuum cleaner may be prevented in advance, according to the self-diagnosis of the vacuum cleaner, a lifetime of the vacuum cleaner may be extended.

A no-load state of a vacuum cleaner which is mentioned throughout the present disclosure indicates a state in which a brush device included in the vacuum cleaner is not affected by a cleaning-target surface. For example, the no-load state of the vacuum cleaner may indicate that a suction port of the brush device does not tightly contact the cleaning-target surface, or the suction port of the brush device is apart from the cleaning-target surface and, thus, is open, but the present disclosure is not limited thereto. According to an embodiment of the present disclosure, the no-load state may be referred to as a lifted state of the vacuum cleaner or a lifted state of the brush device. The lifted state of the vacuum cleaner or the brush device may be defined that the brush device is apart from a cleaning-target surface, by at least a preset value (e.g., a value of a distance with which a bottom load is not applied to the brush device).

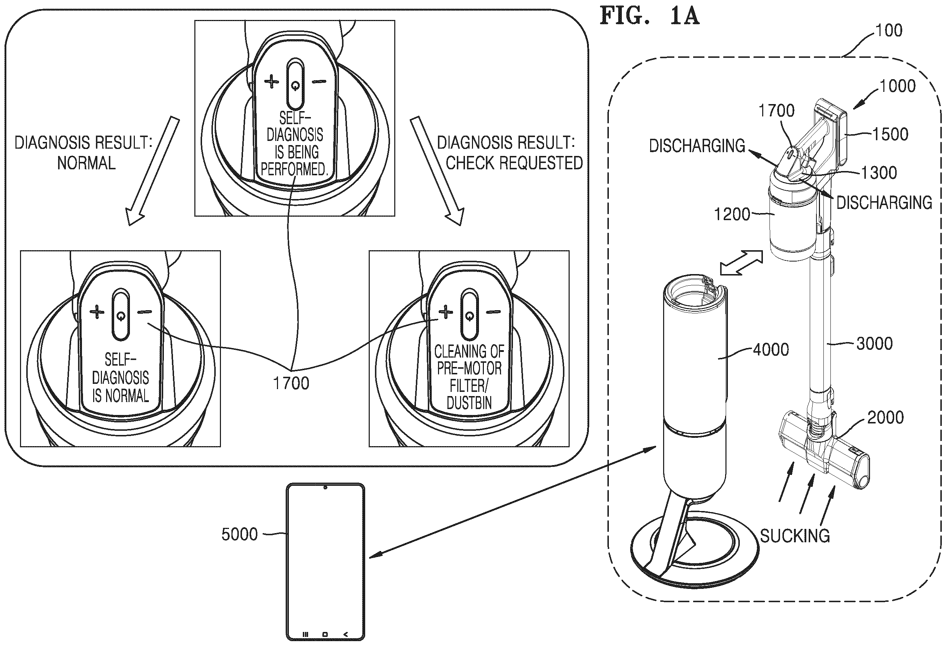

FIG. 1A is a diagram for describing a vacuum cleaner 100 according to an embodiment of the present disclosure.

Referring to FIG. 1A, the vacuum cleaner 100 according to an embodiment of the present disclosure may be a stick-type cleaner including a cleaner body 1000, a brush device 2000, and an extension tube 3000. The vacuum cleaner 100 according to an embodiment of the present disclosure may be a handy-type cleaner including the cleaner body 1000 and the brush device 2000. The vacuum cleaner 100 according to an embodiment of the present disclosure may be a wireless vacuum cleaner including the cleaner body 1000, the brush device 2000, the extension tube 3000, and a station 4000. The vacuum cleaner 100 according to an embodiment of the present disclosure may be a vacuum cleaner with which a user may selectively use among a handy-type and a stick-type. The handy-type cleaner and/or the stick-type cleaner according to an embodiment of the present disclosure may be a wireless vacuum cleaner.

The cleaner body 1000 according to an embodiment of the present disclosure is a part a user can hold and move during cleaning. The cleaner body 1000 may include a dustbin 1200 (also referred to as the dust collector bin) into which foreign substances sucked up from a cleaning-target surface (e.g., a hard floor, a carpet, a mat, etc.) are collected. The cleaner body 1000 may include a filter unit 1300 configured to filter out ultrafine particles that are not filtered out by the dustbin 1200, and to discharge air from which the ultrafine particles are filtered out to the outside of the cleaner body 1000. The cleaner body 1000 may include a pressure sensor 1400 used to detect a value of a pressure in a flow path (hereinafter, also referred to as a flow path pressure) of the vacuum cleaner 100. The flow path of the vacuum cleaner 100 may indicate a section from a location at which sucking up of air including foreign substances starts to a location at which the air from which the foreign substances are removed is discharged. For example, the flow path of the vacuum cleaner 100 may indicate a section from a suction port 2003 of the brush device 2000 to the filter unit 1300 of the cleaner body 1000, but the present disclosure is not limited thereto. The cleaner body 1000 may include a battery 1500 configured to supply power to the cleaner body 1000. The cleaner body 1000 may include a user interface 1700 configured to receive a user input and output self-diagnosis result information of the vacuum cleaner 100.

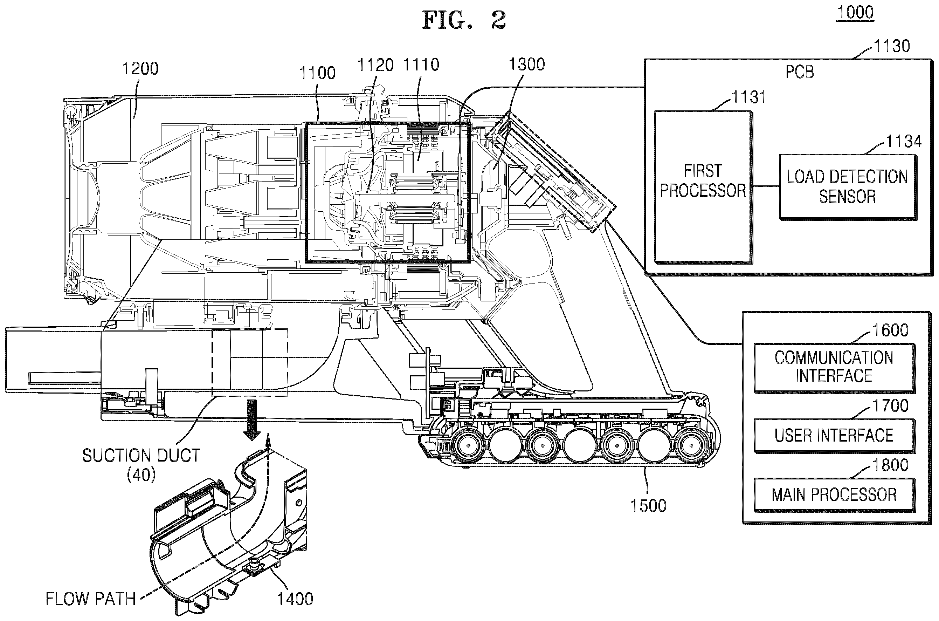

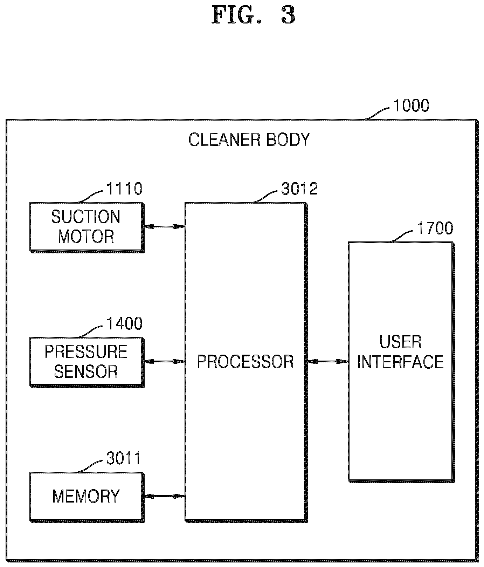

According to an embodiment of the present disclosure, the cleaner body 1000 may have the pressure sensor 1400 mounted to a portion of a suction duct 40, but the present disclosure is not limited thereto. For example, the cleaner body 1000 may have the pressure sensor 1400 mounted to a portion of a motor assembly 1100 to be described with reference to FIG. 2. The cleaner body 1000 may include more elements than the elements shown in FIG. 1A or may include fewer elements than the shown elements. A detailed configuration of the cleaner body 1000 will be described below with reference to FIGS. 2 and 3.

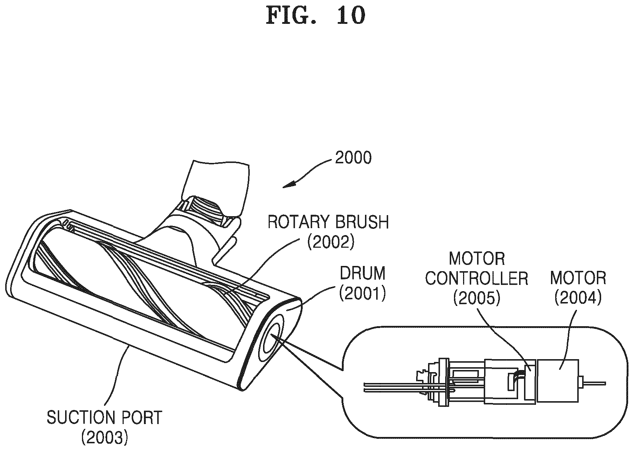

The brush device 2000 according to an embodiment of the present disclosure is a device that tightly contacts the cleaning-target surface so as to suck up air and foreign substances of the cleaning-target surface. The brush device 2000 may also be referred to as a vacuum cleaner head. The brush device 2000 may be rotatably coupled to the extension tube 3000. The brush device 2000 may include a motor 2004, a motor controller 2005, and a drum 2001 having a rotary brush 2002 attached thereto, which will be described with reference to FIG. 10, but the present disclosure is not limited thereto. For example, the brush device 2000 may further include at least one processor for controlling communication with the cleaner body 1000. A type of the brush device 2000 may vary.

The extension tube 3000 may include a pipe or a flexible hose, which has certain hardness. Therefore, the extension tube 3000 may also be referred to as a pipe. The extension tube 3000 may transfer a suction force generated by a suction motor 1110 of the cleaner body 1000 to the brush device 2000, and may move air and foreign substances sucked up by the brush device 2000 to the cleaner body 1000. A vacuum state may be generated in the extension tube 3000 according to an operation of the suction motor 1110. The extension tube 3000 may be detachably connected to the brush device 2000. The extension tube 3000 may be formed in multiple steps between the cleaner body 1000 and the brush device 2000. At least two extension tubes 3000 may be provided.

According to an embodiment of the present disclosure, the cleaner body 1000, the brush device 2000, and the extension tube 3000 included in the vacuum cleaner 100 may include power lines for supplying power provided from the battery 1500 to the cleaner body 1000 and the brush device 2000. The vacuum cleaner 100 may supply power to the cleaner body 1000 and the brush device 2000, by using the power lines.

According to an embodiment of the present disclosure, the cleaner body 1000 may detect attachment or detachment of the brush device 2000, may identify a type of the brush device 2000, and may adaptively control an operation (e.g.: a revolution per minute (RPM) of the rotary brush 2002, an RPM of the motor 2004) of the brush device 2000, based on a usage environment state (e.g.: a hard floor, a carpet, a mat, a corner, a lifted state, or a no-load state, etc.) of the brush device 2000.

A lifted state or a no-load state of the vacuum cleaner 100 or the brush device 2000 indicates a state in which the brush device 2000 is not affected by a cleaning-target surface, and may be a state in which the cleaner body 1000 is docked on the station 4000 or a state in which the cleaner body 1000 is not docked on the station 4000. The state in which the brush device 2000 is not affected by the cleaning-target surface may be identified by comparing a flow path pressure value detected based on the pressure sensor 1400 and a current value of the motor 2004 included in the brush device 2000 with a reference value pre-stored in a memory 3011, but the present disclosure is not limited thereto.

For example, a distance measurement sensor may be attached to the brush device 2000 so as to monitor a distance between the cleaning-target surface and the brush device 2000, and according to a result of the monitoring, when it is detected that the brush device 2000 is apart from the cleaning-target surface by a preset distance or more (or is separate by a preset value or more), it may be determined that the state of the vacuum cleaner 100 or the brush device 2000 is the no-load state or the lifted state. For example, the distance measurement sensor may include an ultrasonic sensor, an infrared sensor, a LiDAR sensor, a radar sensor, or a camera sensor, but the present disclosure is not limited thereto.

According to an embodiment of the present disclosure, in order to determine, based on the flow path pressure value, whether the brush device 2000 is in a state of not being affected by the cleaning-target surface, the cleaner body 1000 may have a reference value with respect to a flow path pressure value related to a state in which the brush device 2000 is not affected by a cleaning-target surface. The reference value with respect to the flow path pressure value may be stored in the memory 3011, and may be read and used by a processor 3012.

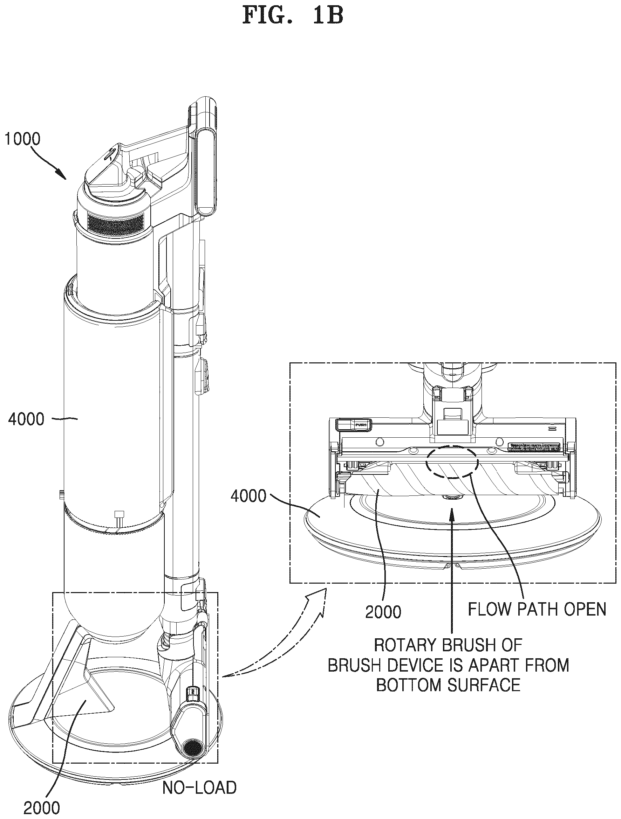

FIG. 1B shows an example for describing a no-load state (or a lifted state) of the vacuum cleaner 100 according to an embodiment of the present disclosure. FIG. 1B illustrates a no-load state of the vacuum cleaner 100 when the cleaner body 1000, the extension tube 3000, and the brush device 2000 are connected or combined and the cleaner body 1000 is docked on the station 4000.

When the vacuum cleaner 100 according to an embodiment of the present disclosure detects that the cleaner body 1000 is docked on the station 4000 while the cleaner body 1000, the extension tube 3000, and the brush device 2000 are connected or combined, the vacuum cleaner 100 may determine a state of the vacuum cleaner 100 as a no-load state. The no-load state of the vacuum cleaner 100 indicates a state in which a rotary brush of the brush device 2000 is apart from a bottom surface, as shown in FIG. 1B, and a flow path of the brush device 2000 is open. The vacuum cleaner 100 may detect that it is docked on the station 4000 using a charge terminal or a docking detection sensor included in the station 400, but the present disclosure is not limited thereto. For example, when it is detected that the battery 1500 is electrically connected to the charge terminal of the station 400, the vacuum cleaner 100 may detect that it is docked on the station 400, and may determine a state of the vacuum cleaner 100 as the no-load state. The docking detection sensor that is not shown may be mounted to a portion of the station 4000 or may be mounted to at least one of a portion of the cleaner body 1000 or a portion of the brush device 2000, but a mounted location of the docking detection sensor is not limited thereto.

According to an embodiment of the present disclosure, after the vacuum cleaner 100 is docked on the station 4000 and a dust emptying operation of the dustbin 1200 is completed, the vacuum cleaner 100 may determine the state of the vacuum cleaner 100 as the no-load state. By doing so, the vacuum cleaner 100 may further correctly perform a self-diagnosis. According to an embodiment of the present disclosure, after the vacuum cleaner 100 determines the state of the vacuum cleaner 100 as the no-load state, as described above, the vacuum cleaner 100 may perform a self-diagnosis according to an embodiment of the present disclosure, according to a user input received based on a user interface included in the station 4000 or the user interface 1700 included in the cleaner body 1000. The user interface included in the station 4000 or the user interface 1700 included in the cleaner body 1000 may include a self-diagnosis button. Accordingly, as a user may perform self-diagnosis on the vacuum cleaner 100 by using the self-diagnosis button, the user may perform the self-diagnosis on the vacuum cleaner 100 at a user-desired time. Self-diagnosis of the vacuum cleaner 100 according to an embodiment of the present disclosure may be performed by using an application set in another electronic device 5000. The application is a smart application that is an application dedicated for the vacuum cleaner 100 or a home network-dedicated application, but the present disclosure is not limited thereto. In this regard, the other electronic device 5000 may be a smart phone or a portable terminal device, but the present disclosure is not limited thereto. For example, the other electronic device 5000 may be a smart refrigerator.

An operation in which the vacuum cleaner 100 determines a no-load state, which is described with reference to FIG. 1B, may be applied to a vacuum cleaner that has a wall-mount type charger and at which the brush device 2000 is docked while being apart from a cleaning-target surface.

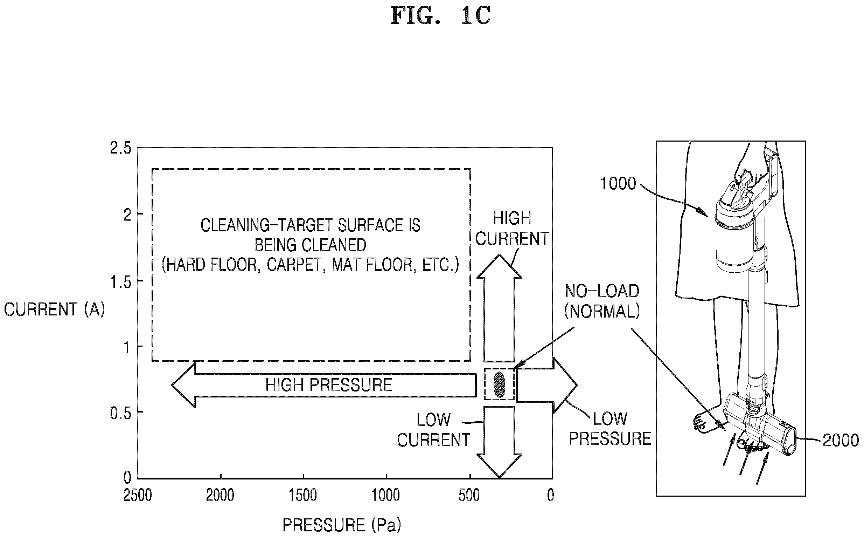

FIG. 1C shows an example for describing a no-load state of the vacuum cleaner 100 while the vacuum cleaner 100 is being used, according to an embodiment of the present disclosure.

FIG. 1C shows an example in which a state in which the brush device 2000 is apart from a cleaning-target surface is determined as a no-load state of the vacuum cleaner 100, when a user cleans the cleaning-target surface while the cleaner body 1000, the extension tube 3000, and the brush device 2000 are connected or combined. Referring to FIG. 1C, the no-load state of the vacuum cleaner 100 may be determined by using a current value and a pressure value. The current value and the pressure value shown in FIG. 1C indicate a brush motor current value and a flow path pressure value which are described in an embodiment of the present disclosure.

As shown in a relation between the current value and the pressure value shown in FIG. 1C, a pressure value and a current value which are detected when the vacuum cleaner 100 cleans the cleaning-target surface are higher than a pressure value and a current value which are detected when the vacuum cleaner 100 is in a no-load state. As shown in FIG. 1C, in order to determine a no-load state of the vacuum cleaner 100, the vacuum cleaner 100 may store reference values with respect to a pressure value and a current value in the memory 3011, and may determine the no-load state of the vacuum cleaner 100 while continuously monitoring a pressure value and a current value in use of the vacuum cleaner 100. To continuously monitor the pressure value and the current value may indicate that the pressure value and the current value are continuously detected or periodically detected. A state of using the vacuum cleaner 100 indicates a state in which the vacuum cleaner 100 cleans the cleaning-target surface (e.g., a hard floor, a carpet, a mat, etc.). For example, when a current value and a pressure value detected in use of the vacuum cleaner 100 are included in reference values (reference values at which a no-load state is determined in the relation shown in FIG. 1C (e.g., a pressure value is between 480 and 250Pa, and a current value is between 0.6 and 0.8A)) stored in the memory 3011, the vacuum cleaner 100 may determine a state of the vacuum cleaner 100 as the no-load state. However, the reference values of the pressure value and the current value which are used to determine the no-load state of the vacuum cleaner 100 are not limited thereto.

According to an embodiment of the present disclosure, the cleaner body 1000 may detect data related to a load of the brush device 2000. For example, the data related to the load of the brush device 2000 may include a current value of the motor 2004 (or a brush motor current value) included in the brush device 2000 and shown in FIG. 10 to be described below. The current value of the motor 2004 may be a current value of the motor 2004 included in the brush device 2000 when the vacuum cleaner 100 operates with preset power consumption while a state of the vacuum cleaner 100 is a no-load state. The current value of the motor 2004 may also be referred to as an operating current value of the brush device 2000. When the vacuum cleaner 100 operates with preset power consumption, the cleaner body 1000 may be docked (or mounted) on the station 4000 or may not be docked (or not mounted) on the station 4000.

According to an embodiment of the present disclosure, the user interface 1700 may be arranged at a handle of the cleaner body 1000, but the present disclosure is not limited thereto. For example, the user interface 1700 may be arranged to be adjacent to the motor assembly 1100. The user interface 1700 may include an input interface and an output interface. The input interface may include buttons such as a power button, a suction force level adjustment button, etc., that a user can select or via which the user can input data, but the present disclosure is not limited thereto. The output interface may include a display such as a light-emitting diode (LED), a liquid crystal display (LCD), a touch screen, etc., but the present disclosure is not limited thereto. For example, the output interface may further include an audio output unit such as a speaker. The audio output unit such as the speaker included in the output interface may output, as an audio signal, a self-diagnosis result of the vacuum cleaner 100 according to an embodiment of the present disclosure. When the output interface is configured as the touch screen, the output interface may be referred to as an input/output interface. When the output interface is configured as the touch screen or the display, the vacuum cleaner 100 may display the self-diagnosis result on the output interface.

The user interface 1700 of the present disclosure may output information indicating that a self-diagnosis is being performed, and self-diagnosis result information, as shown in FIG. 1A. The self-diagnosis result information may include information indicating that a self-diagnosis result is "normal", and information indicating that "check is requested". The information indicating that "check is requested" may output information about a detailed check list. When the self-diagnosis result information includes a plurality of check items, the user interface 1700 may sequentially output the plurality of check items or information about the plurality of check items. When the self-diagnosis result information includes the plurality of check items, the user interface 1700 may simultaneously output the plurality of check items or the information about the plurality of check items. The information about the plurality of check items may include detailed information about the plurality of check items, but the present disclosure is not limited thereto. For example, the information about the plurality of check items may include connoted information about each check item and link information connectable to detailed information. For example, the connoted information may include a number or a name of an element. For example, after the connoted information is output via the user interface 1700, when a selection signal with respect to one information is received from a user, the cleaner body 1000 may provide the user with detailed information by using link information corresponding to the selected information. The link information may include information that connects the selected information to the detailed information. The link information may include information that can fetch and read detailed information, according to selection of the selected information.

When the user requests detailed information about a check item, the vacuum cleaner 100 may transmit the detailed information to the other electronic device 5000 via the station 4000, and may output the detailed information via the other electronic device 5000. The detailed information may include information about an action (or an appropriate action) that the user can do with respect to the check item or guide information about the check item. The detailed information may be output via the user interface 1700. When the self-diagnosis result is "normal", the vacuum cleaner 100 may activate a smart mode or an artificial intelligence (AI) mode.

The smart mode or the Al mode of the vacuum cleaner 100 is a mode in which power consumption (or a suction force) of the suction motor 1110 and a rotation speed of the motor 2004 (or a rotation speed of the drum 2001) included in the brush device 2000 are adjusted by detecting a variation mount of a vacuum pressure of the vacuum cleaner 100 and a load state of the brush device 2000 (a current value of the motor 2004 or a current value of a brush motor), according to a condition (e.g., a carpet, a hard floor, a mat, etc.) of a cleaning-target surface and a cleaning environment (e.g., whether the brush device 2000 tightly contacts or is lifted from a bottom surface, a dustbin blockage level, etc.). A normal mode of the vacuum cleaner 100 is a mode in which the power consumption of the suction motor 1110 and the rotation speed of the motor 2004 (or the rotation speed of the drum 2001) included in the brush device 2000 are not changed according to the condition of the cleaning-target surface and the cleaning environment.

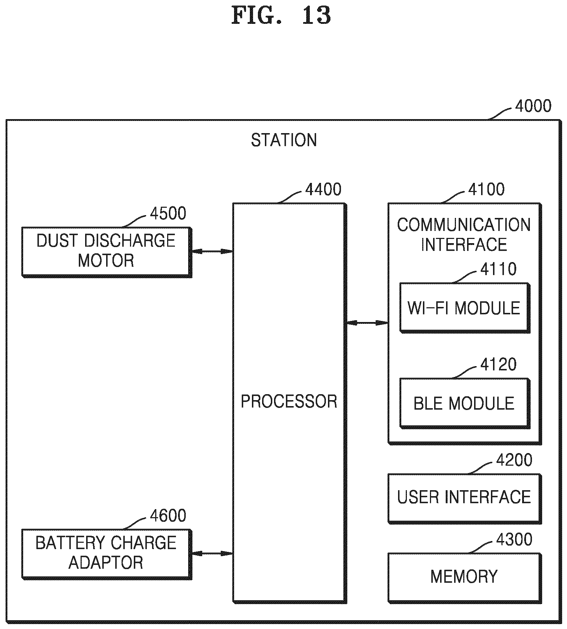

According to an embodiment of the present disclosure, the cleaner body 1000 may be docked on the station 4000. The station 4000 may be configured to charge the battery 1500, when the cleaner body 1000 is docked. The station 4000 may be configured to open a door of the dustbin 1200 so as to empty the dustbin 1200 of the cleaner body 1000 and to discharge dusts from the dustbin 1200, when the cleaner body 1000 is docked. The station 4000 may be configured to perform wireless communication with the cleaner body 1000. The station 4000 may be configured to communicate with an Internet of Things (IoT) server in home or an external server. The station 4000 may be configured to communicate with the other electronic device 5000 in home. The station 4000 may be configured to perform short-range communication such as Bluetooth low energy (BLE) communication with the cleaner body 1000. The station 4000 may be configured to perform Wi-Fi communication with the other electronic device 5000. The station 4000 may be configured to communicate with the cleaner body 1000 by using universal asynchronous receiver/transmitter (UART) or an inter integrated circuit (I2C). The station 4000 may be configured to transmit and receive data to and from the other electronic device 5000, an external server (not shown), or the cleaner body 1000, based on a particular communication function application. A configuration of the station 4000 will be described below with reference to FIG. 13.

The cleaner body 1000 may be configured to perform a self-diagnosis operation according to an embodiment of the present disclosure, when the cleaner body 1000 is docked on the station 4000. The cleaner body 1000 may be configured to perform a self-diagnosis operation according to an embodiment of the present disclosure, when the cleaner body 1000 is docked on the station 4000 and then the door of the dustbin 1200 is open by the station 4000. That the door of the dustbin 1200 is open may include a state in which emptying of dusts in the dustbin 1200 is completed. When the cleaner body 1000 detects a state in which the brush device 2000 is not affected by a cleaning-target surface (or a no-load state or a lifted state of the vacuum cleaner 100), the cleaner body 1000 may perform a self-diagnosis operation according to an embodiment of the present disclosure. When the cleaner body 1000 determines a no-load state or a lifted state of the vacuum cleaner 100 described with reference to FIGS. 1B and 1C, the cleaner body 1000 may perform a self-diagnosis operation according to an embodiment of the present disclosure.

The other electronic device 5000 may include a smart phone, a mobile terminal, a portable terminal, or communication-enabled smart home appliances. The other electronic device 5000 may be connected to the station 4000 via Wi-Fi communication so as to receive state information with respect to the cleaner body 1000 and to transmit information or a command for controlling the cleaner body 1000 to the station 4000. The station 4000 may transmit result information about a self-diagnosis performed by the cleaner body 1000 to the other electronic device 5000. For example, the result information about the self-diagnosis may include information indicating that the cleaner body 1000 is in a normal state, information indicating that the cleaner body 1000 requests a check, information about an element for which a check is requested in the cleaner body 1000 (information about a check item), information about a check method for the element for which the check is requested in the cleaner body 1000 (or check guide information), etc., but the present disclosure is not limited thereto. The other electronic device 5000 may establish a communication channel with the station 4000, based on the particular communication application, and may transmit and receive data. The data being transmitted and received may include information about a state of the vacuum cleaner 100, an operation control command of the vacuum cleaner 100, and/or operation state information of the vacuum cleaner 100, but the present disclosure is not limited thereto.

Not all elements of the vacuum cleaner 100 and the cleaner body 1000 shown in FIG. 1A are necessary elements. The vacuum cleaner 100 and the cleaner body 1000 may be embodied with more elements than the elements shown in FIG. 1A or may be embodied with fewer elements than the shown elements.

The self-diagnosis result of the vacuum cleaner 100 according to an embodiment of the present disclosure may include at least one of a state check for a flow path blockage in the brush device 2000, a state check for foreign substances stuck in the drum 2001 included in the brush device 2000, an assembly state check for the drum 2001 included in the brush device 2000, a state check for the dustbin 1200 included in the cleaner body 1000, a state check for a filter (or a state check for a pre-motor filter) included in the cleaner body 1000, or a state check for the extension tube 3000 between the cleaner body 1000 and the brush device 2000, but the present disclosure is not limited thereto. For example, the self-diagnosis result of the vacuum cleaner 100 according to an embodiment of the present disclosure may include a flow path blockage of a pipe (or the extension tube 3000)/a brush (or the brush device 2000), cleaning of the pre-motor filter (or the filter unit 1300)/the dustbin 1200, foreign substances stuck in the brush drum, and/or a state check for a drum assembly, etc.

FIGS. 2 and 3 are diagrams for describing the cleaner body 1000 according to an embodiment of the present disclosure. FIG. 3 is a block diagram of functions of the cleaner body 1000 according to an embodiment of the present disclosure. With reference to FIGS. 2 and 3, the cleaner body 1000 according to an embodiment of the present disclosure will now be described in detail.

The cleaner body 1000 may include a handle provided for a user to grip. Therefore, the cleaner body 1000 may be expressed as a handy body. The user may grip the handle, and may move the cleaner body 1000 and the brush device 2000 in front and rear directions.

Referring to FIG. 2, the cleaner body 1000 may include a suction force generator (hereinafter, also referred to as the motor assembly 1100) to generate a suction force requested to suck up foreign substances on a cleaning-target surface. Also, the cleaner body 1000 may include the dustbin 1200 (also referred to as the dust collector bin) in which foreign substances sucked up from a cleaning-target surface are contained, the filter unit 1300, the pressure sensor 1400, the battery 1500 capable of supplying power to the motor assembly 1100, a communication interface 1600, the user interface 1700, the memory 3011, and the at least one processor 3012. The at least one processor 3012 may include a main processor 1800 and a first processor 1131 shown in FIG. 2, but the present disclosure is not limited thereto.

The memory 3011 may store a program or at least one instruction for processing and control by the at least one processor 3012. The memory 3011 may store input/output data, such as a pre-trained artificial intelligence (AI) model (e.g.: a support vector machine (SVM) algorithm, etc.), state data of the suction motor 1110, a measurement value of the pressure sensor 1400, state data of the battery 1500, state data of the brush device 2000, error occurrence data, power consumption of the suction motor 1110 corresponding to an operation condition, an RPM of the drum 2001 included in the brush device 2000, an RPM of the motor 2004 included in the brush device 2000, a trip level of the motor 2004 included in the brush device 2000, or the like. The trip level is to prevent overload of the brush device 2000 and may indicate a reference load value (e.g.: a reference current value of the motor 2004) for stopping an operation of the brush device 2000.

According to an embodiment of the present disclosure, the memory 3011 may store data for performing a self-diagnosis with respect to a state of the vacuum cleaner 100. The data for performing a self-diagnosis with respect to a state of the vacuum cleaner 100 may include a reference value for performing the self-diagnosis with respect to the state of the vacuum cleaner 100. The reference value may be set according to a type of the brush device 2000 and whether the vacuum cleaner 100 operates. The reference value may include a reference value for a flow path pressure value, and a reference value for data related to a load of the brush device 2000. The reference value for the flow path pressure value, and the reference value related to the load of the brush device 2000 may each include a value for determination of a no-load state of the vacuum cleaner 100 and a value for a self-diagnosis. The data related to a load of the brush device 2000 may include a current value of the motor 2004 (a brush motor current value) included in the brush device 2000.

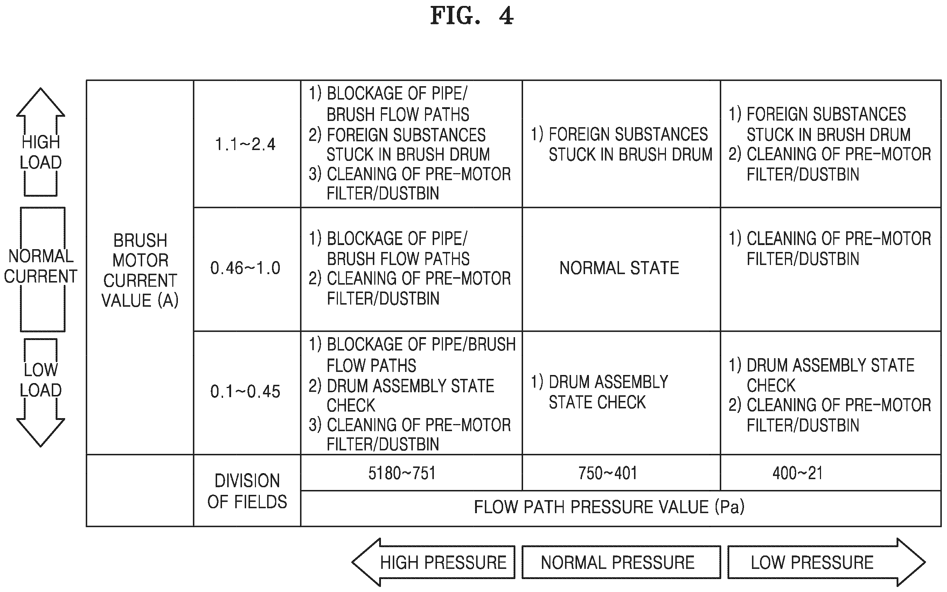

According to an embodiment of the present disclosure, in a case where it is determined whether a state of the vacuum cleaner 100 is a normal state or an abnormal state (or a state in which a check is requested), and it is the abnormal state, in order to determine a check item of the vacuum cleaner 100, the memory 3011 may store tables shown in FIGS. 4 to 9, and information (or data) such as the tables shown in FIGS. 4 to 9 which are requested to obtain a self-diagnosis result. For example, the memory 3011 may store each of a current value A of the motor 2004 of the brush device 2000 and a reference value for a self-diagnosis with respect to a flow path pressure value Pa of the vacuum cleaner 100, or may store a self-diagnosis reference value in which the current value A of the motor 2004 and the flow path pressure value Pa of the vacuum cleaner 100 are combined. The memory 3011 may store a self-diagnosis reference value at the time of product manufacturing or may store the self-diagnosis reference value when the vacuum cleaner 100 is initially set. The self-diagnosis reference value stored in the memory 3011 may include a self-diagnosis reference value when the vacuum cleaner 100 is in a no-load state, according to a type of the brush device 2000. Reference values stored in the memory 3011 according to an embodiment of the present disclosure will be described in detail below with reference to FIGS. 4 to 9.

Referring to FIG. 2, the motor assembly 1100 may include the suction motor 1110 for converting an electric force to mechanical rotary power, a fan 1120 rotatably connected to the suction motor 1110, and a printed circuit board (PCB) 1130 connected to the suction motor 1110. The suction motor 1110 may generate vacuum in the vacuum cleaner 100. Here, vacuum indicates a state lower than a barometric pressure. The suction motor 1110 may include a brushless direct current (BLDC) motor, but the present disclosure is not limited thereto.

The PCB 1130 may include the first processor 1131 to control the suction motor 1110 and control communication with the brush device 2000, and the load detection sensor 1134 (e.g., a shunt resistor) to detect a load of the brush device 2000, but the present disclosure is not limited thereto.

The first processor 1131 may obtain data related to a state of the suction motor 1110 (hereinafter, referred to as the state data), and may transfer the state data of the suction motor 1110 to the main processor 1800. Also, the first processor 1131 may transmit a control signal for controlling the brush device 2000 to the brush device 2000. For example, the control signal transmitted to the brush device 2000 may include data indicating at least one of a target RPM of the motor 2004 included in the brush device 2000 (or a target RPM of the drum 2001), a target trip level of the motor 2004 included in the brush device 2000, or power consumption of the suction motor 1110, but the present disclosure is not limited thereto.

The first processor 1131 may detect a signal transmitted from the brush device 2000. The brush device 2000 may transmit data indicating a current state to the first processor 1131, but the present disclosure is not limited thereto. For example, the brush device 2000 may transmit, to the first processor 1131, data about a currently-operating condition (e.g., a RPM of the motor 2004, a current trip level, etc.). Also, the brush device 2000 may transmit data indicating a type of the brush device 2000. The first processor 1131 may transmit, to the main processor 1800, data indicating the current state of the brush device 2000 or data indicating the type of the brush device 2000. The first processor 1131 may detect whether the brush device 2000 is lifted up from a cleaning-target surface, and may transmit a result of the detection to the main processor 1800. Accordingly, the main processor 1800 may determine whether the vacuum cleaner 100 is in a no-load state. The first processor 1131 may detect whether the brush device 2000 is lifted up from a cleaning-target surface, by using the reference value stored in the memory 3011 and described with reference to FIG. 1C, and thus, the main processor 1800 may determine whether the vacuum cleaner 100 is in a no-load state.

The motor assembly 1100 may be provided in the dustbin 1200. The dustbin 1200 may be configured to filter and collect dust or debris from the air introduced through the brush device 2000. Accordingly, the dustbin 1200 may also be referred to as the dust collector bin. The dustbin 1200 may be detachably provided from the cleaner body 1000.

The dustbin 1200 may collect foreign substances by using a cyclone scheme to separate foreign substances by using a centrifugal force. Air from which foreign substances are removed according to the cyclone scheme may be discharged from the cleaner body 1000, and the foreign substances may be stored in the dust dustbin 1200. A multi-cyclone may be provided in the dustbin 1200. The dustbin 1200 may be provided such that foreign substances are collected at the lower side of the multi-cyclone. The dustbin 1200 may include a door provided to open the dustbin 1200 when the station 4000 is connected thereto. The dustbin 1200 may include a first dust collector in which relatively large foreign substances are primarily collected, and a second dust collector in which relatively small foreign substances are collected by the multi-cyclone. Both the first dust collector and the second dust collector may be provided to be open to the outside when the door of the dustbin is open.

The filter unit 1300 may filter out ultrafine particles that are not filtered out by the dustbin 1200. The filter unit 1300 may include an outlet through which air that has passed through a filter is discharged to the outside of the vacuum cleaner 100. The filter unit 1300 may include a motor filter, a HEPA filter, etc., but the present disclosure is not limited thereto. The filter unit 1300 may also be referred to as a pre-filter or a pre-motor filter.

The pressure sensor 1400 may measure (or detect) a flow path pressure value of the vacuum cleaner 100. When the pressure sensor 1400 is provided at a suction end (e.g.: the suction duct 40), the pressure sensor 1400 may measure a change in a flow speed at its location by measuring a static pressure. The pressure sensor 1400 may be an absolute pressure sensor or a relative pressure sensor. When the pressure sensor 1400 is the absolute pressure sensor, the at least one processor 3012 may obtain, from using the pressure sensor 1400, a first pressure value before the suction motor 1110 is operated (or the vacuum cleaner 100 is operated). That the first pressure value is obtained from the pressure sensor 1400 may indicate that the first pressure value is obtained by using the pressure sensor 1400. That the first pressure value is obtained from the pressure sensor 1400 may indicate that the first pressure value is detected.

After the processor 3012 drives the suction motor 1110 with a preset target RPM (or drives the vacuum cleaner 100 with preset power consumption), the processor 3012 may obtain a second pressure value from the pressure sensor 1400. That the second pressure value is obtained from the pressure sensor 1400 may indicate that the second pressure value is obtained by using the pressure sensor 1400. That the second pressure value is obtained from the pressure sensor 1400 may indicate that the second pressure value is detected from the pressure sensor 1400.

The processor 3012 may use a differences between the first pressure value and the second pressure value as a pressure value (or a flow path pressure value Pa) in a flow path. The first pressure value may be a pressure value due to inside/outside affects such as weather, altitude, a state of the vacuum cleaner 100, an amount of sucked up dust, etc., the second pressure value may be a pressure value due to inside/outside affects such as altitude, a state of the vacuum cleaner 100, an amount of sucked up dust, etc., and a pressure value due to operation of the suction motor 1110, and a difference between the first pressure value and the second pressure value may be a pressure value due to operation of the suction motor 1110. Therefore, when the difference between the first pressure value and the second pressure value is used as a pressure value in the flow path (the flow path pressure value), inside/outside affects other than the suction motor 1110 may be minimized.

The flow path pressure value measured by the pressure sensor 1400 may be used to identify a current usage environment state (e.g.: a state of a cleaning-target surface, such as hard floor, carpet, mat, corner, etc., a state being lifted from the cleaning-target surface (or a state not be affected by the cleaning-target surface or a no-load state, etc.) of the brush device 2000, or may be used to detect (or measure) a suction force that changes due to a contamination level or an amount of collected dust in the dustbin 1200.

The pressure sensor 1400 may be located at the suction end (e.g.: the suction duct 40). The suction duct 40 may be a structure via which the dustbin 1200 and the extension tube 3000 or the dustbin 1200 and the brush device 2000 are connected to allow a flow including foreign substances to be moved to the dustbin 1200. The pressure sensor 1400 may be located at the end of a straight portion (or a knee point between the straight portion and a curved portion) of the suction duct 40, in consideration of contamination of foreign substances/dust, but the present disclosure is not limited thereto. The pressure sensor 1400 may be located at the middle of the straight portion of the suction duct 40. When the pressure sensor 1400 is located at the suction duct 40, the pressure sensor 1400 may be implemented as a negative pressure sensor.

In the present disclosure, a case where the pressure sensor 1400 is located at the suction duct 40 is described, but the present disclosure is not limited thereto. The pressure sensor 1400 may be located at the outlet (e.g.: in the motor assembly 1100). In a case where the pressure sensor 1400 is located in the motor assembly 1100, when the vacuum cleaner 100 according to an embodiment of the present disclosure performs a self-diagnosis, the processor 3012 may diagnose whether an entire flow path of the vacuum cleaner 100 is blocked, based on a flow path pressure value detected using the pressure sensor 1400.

Also, the pressure sensor 1400 may be provided in plural in the vacuum cleaner 100. For example, when the pressure sensor 1400 is located at each of a portion of the suction duct 40 and the motor assembly 1100, the vacuum cleaner 100 may perform a complex self-diagnosis, based on pressure values detected by the plurality of pressure sensors 1400. For example, by using a pressure value detected by the pressure sensor mounted at the motor assembly 1100 and a pressure value detected by the pressure sensor 1400 mounted at the suction duct 40, the vacuum cleaner 100 may diagnose a blockage of a flow path of the cleaner body 1000, may diagnose whether a location at which the flow path of the cleaner body 1000 is blocked is a flow path of the brush device 2000 or a flow path of the extension tube 3000, etc., and may output a result of the diagnosis. In this regard, the pressure value detected by the pressure sensor mounted at the motor assembly 1100 may indicate a difference value (a flow path pressure) between a first pressure value before the vacuum cleaner 100 is operated and a second pressure value after the vacuum cleaner 100 is operated with set power consumption.

The battery 1500 may be detachably connected to the cleaner body 1000. The battery 1500 may be electrically connected to a charge terminal provided at the station 4000. The battery 1500 may be charged by receiving power from the charge terminal. The station 4000 may be a device for dust discharging from the vacuum cleaner 100 and charging of the battery 1500. When usage is completed, the cleaner body 1000 may be placed (docked) on the station 4000. The station 4000 may be expressed as a clean station.

The cleaner body 1000 may include the communication interface 1600 for performing communication with an external device. For example, the cleaner body 1000 may perform communication with the station 4000 or a server device (not shown) or the other electronic device 5000 via the communication interface 1600. The communication interface 1600 may include a short-range wireless communication interface, a long-range wireless communication interface, or the like. The short-range wireless communication interface may include a Bluetooth communication interface, a BLE communication interface, a near field communication (NFC) interface, a wireless local area network (WLAN) (or Wi-Fi) communication interface, a ZigBee communication interface, an Infrared Data Association (IrDA) communication interface, a Wi-Fi Direct (WFD) communication interface, an ultra-wideband (UWB) communication interface, and/or an Ant+ communication interface, but the present disclosure is not limited thereto.

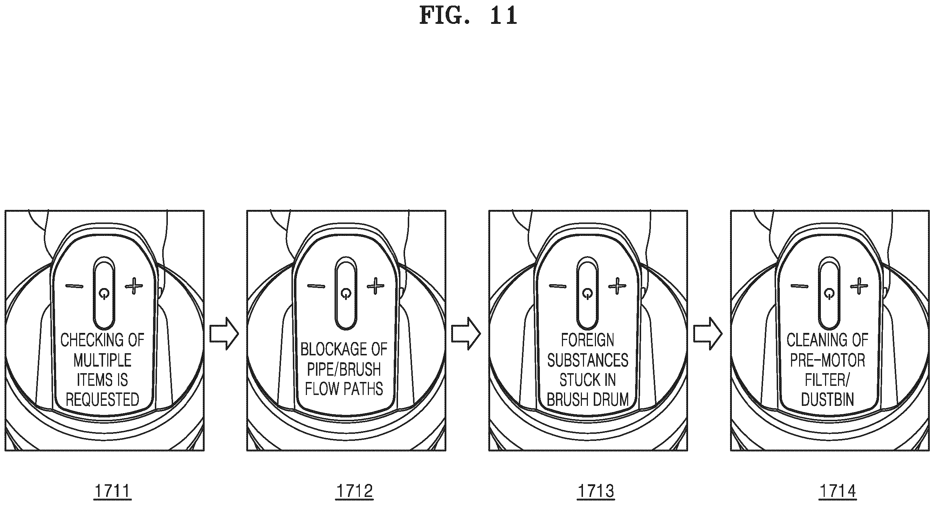

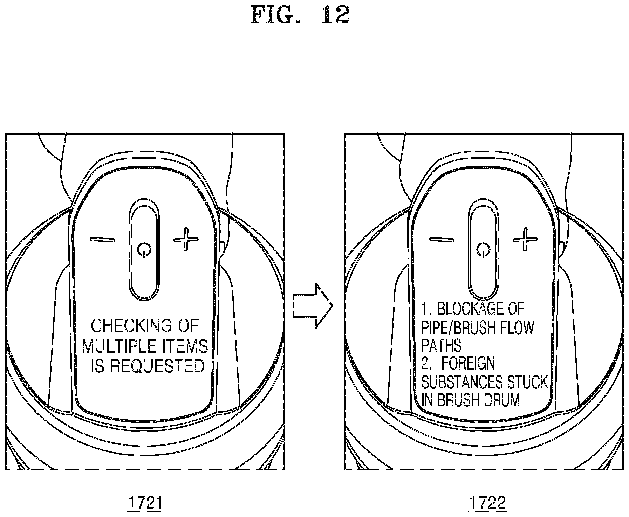

The user interface 1700 may be provided at the handle. The user interface 1700 may include the input interface and the output interface. The cleaner body 1000 may receive a user input related to an operation of the vacuum cleaner 100 and may output information related to an operation of the vacuum cleaner 100, via the user interface 1700. The input interface may include a power button, a suction force level adjustment button, or the like. The output interface may include a LED, an LCD, a touchscreen, or the like, but the present disclosure is not limited thereto. The user interface 1700 may output information related to a self-diagnosis result, as shown in FIGS. 11 and 12 to be described below.

The cleaner body 1000 may include the at least one processor 3012. The at least one processor 3012 may be configured as one processor or may include a plurality of processors. For example, the at least one processor 3012 may include the main processor 1800 connected to the user interface 1700, and the first processor 1131 connected to the suction motor 1110. The at least one processor 3012 may include only the first processor 1131. In this case, the first processor 1131 may be referred to as a main processor. The at least one processor 3012 may include only the main processor 1800. In this case, the main processor 1800 may further perform an operation performed by the first processor 1131.

The at least one processor 3012 may control all operations of the vacuum cleaner 100. For example, when the vacuum cleaner 100 is in a no-load state (or a lifted state), the at least one processor 3012 may detect a flow path pressure value detected using the pressure sensor 1400, power consumption of the suction motor 1110, an RPM of the motor 2004 of the brush device 2000, an RPM of the drum 2001 of the brush device 2000, a trip level of the brush device 2000, a current value of the motor 2004 of the brush device 2000, etc.

Referring to FIG. 3, the cleaner body 1000 may include the suction motor 1110, the pressure sensor 1400, the memory 3011, the user interface 1700, and the processor 3012, but the present disclosure is not limited thereto. The processor 3012 may execute at least one instruction stored in the memory 3011 to determine whether a state of the vacuum cleaner 100 is a no-load state. When a state in which the brush device 2000 is not affected by a cleaning-target surface is detected, the processor 3012 may determine that the state of the vacuum cleaner 100 is the no-load state. The processor 3012 may detect the state in which the brush device 2000 is not affected by the cleaning-target surface (or a lifted state of the brush device 2000), by using the flow path pressure value detected using the pressure sensor 1400, but the present disclosure is not limited thereto. For example, the processor 3012 may detect the state in which the brush device 2000 is not affected by the cleaning-target surface, based on a sensing value detected by a distance sensor (not shown) installed in the brush device 2000. The no-load state of the vacuum cleaner 100 may be determined as described with reference to FIG. 1B or 1C.

When the state of the vacuum cleaner 100 is determined as the no-load state, the processor 3012 may detect a flow path pressure value of the vacuum cleaner 100 by using the pressure sensor 1400. Even before whether the state of the vacuum cleaner 100 is the no-load state is determined, the processor 3012 may detect the flow path pressure value of the vacuum cleaner 100 by using the pressure sensor 1400. After power is applied, the processor 3012 may detect a flow path pressure value at preset intervals, but the present disclosure is not limited thereto. For example, after the processor 3012 receives a user input for requesting a self-diagnosis, the processor 3012 may detect a flow path pressure value. When the state of the vacuum cleaner 100 is determined as the no-load state, the processor 3012 may detect data related to a load of the brush device 2000 (e.g., a current value of the motor 2004 included in the brush device 2000). Even before whether the state of the vacuum cleaner 100 is the no-load state is determined, the processor 3012 may detect data related to the load of the brush device 2000 (a brush motor current value). After power is applied, the processor 3012 may detect the data related to the load of the brush device 2000 at preset intervals, but the present disclosure is not limited thereto. For example, after the processor 3012 receives a user input for requesting a self-diagnosis, the processor 3012 may detect the data related to the load of the brush device 2000.

The processor 3012 may compare the detected flow path pressure value with a reference value corresponding to the flow path pressure value, the reference value being stored in the memory 3011. The processor 3012 may compare the detected data related to the load of the brush device 2000 with a reference value corresponding to the data related to the load of the brush device 2000, the reference value being stored in the memory 3011. The processor 3012 may diagnose the state of the vacuum cleaner 100, based on a result of the comparison. The diagnosis of the state of the vacuum cleaner 100 which is performed by the processor 3012 may be performed while the vacuum cleaner 100 is being used. For example, as shown in FIG. 1C, when a no-load state of the vacuum cleaner 100 is determined based on the flow path pressure value and the brush motor current value which are detected during the vacuum cleaner 100 being used, the processor 3012 may diagnose (or perform self-diagnosis on) a state of the vacuum cleaner 100 by using the detected flow path pressure value and the detected brush motor current value and the reference values stored in the memory 3011.

The processor 3012 may output information about a diagnosis result to the user interface 1700. The information about the diagnosis result which is output via the user interface 1700 may be as shown in FIG. 11 or 12, but the present disclosure is not limited thereto. For example, the information about the diagnosis result may be output as an audio signal. The audio signal may include an alarm signal, or a voice message, etc.

The processor 3012 may record data to the memory 3011 or may read data stored in the memory 3011, and in particular, the processor 3012 may execute a program stored in the memory 3011 to process data according to a predefined operation rule or an artificial intelligence model. Accordingly, the processor 3012 may perform operations to be described in subsequent embodiments, and it is equal that operations described that the cleaner body 1000 performs in the subsequent embodiments are performed by the processor 3012, unless there is description indicating otherwise. According to an embodiment of the present disclosure, the processor 3012 may execute the program stored in the memory 3011 to perform a process of outputting information about a result of a self-diagnosis performed by the cleaner body 1000 to the user interface 1700 or transmitting the information to the other electronic device 5000.

A diagnosis with respect to the vacuum cleaner 100 which is to be described below with reference to FIGS. 4 to 9 is performed after it is determined that the vacuum cleaner 100 is in a no-load state, but the present disclosure is not limited thereto.

FIG. 4 shows an example of a self-diagnosis table for the vacuum cleaner 100, based on a current value A of the motor 2004 of the brush device 2000 (or a brush motor current value A), and a flow path pressure value Pa of the vacuum cleaner 100, according to an embodiment of the present disclosure. The numerical values of the brush motor current value A, the flow path pressure value Pa of the vacuum cleaner 100, and the check items (e.g., blockage of pipe/brush flow paths, foreign substances stuck in a brush drum, cleaning of pre-motor filter/dustbin, etc.) which are shown in FIG. 4 are merely an example, and the present disclosure is not limited thereto.

Referring to the table of FIG. 4, when the brush motor current value A (the current value of the motor 2004 of the brush device 2000) is between 0.46 and 1.0A, and the flow path pressure value Pa (a pressure value in a flow path of the vacuum cleaner 100) is between 750 and 401Pa, the processor 3012 may determine that a state of the vacuum cleaner 100 is a normal state. In this regard, the state of the vacuum cleaner 100 is a no-load state as shown in FIG. 1C. Reference values with which the state of the vacuum cleaner 100 is determined as the normal state when the brush motor current value is between 0.46 and 1.0A, and the flow path pressure value is between 750 and 401Pa are stored in the memory 3011. The processor 3012 may read the reference values stored in the memory 3011, and may determine the state of the vacuum cleaner 100 by comparing the read reference values with the currently detected the flow path pressure value and the brush motor current value.

Referring to the table of FIG. 4, when the brush motor current value is between 1.1 and 2.4A, and the flow path pressure value is between 5180 and 751Pa, the processor 3012 may determine that the state of the vacuum cleaner 100 is an abnormal state (a state requiring inspection). Reference values with which the state of the vacuum cleaner 100 is determined as the abnormal state when the brush motor current value is between 1.1 and 2.4A, and the flow path pressure value is between 5180 and 751Pa are stored in the memory 3011. In this regard, the processor 3012 may determine a cause of the abnormal state of the vacuum cleaner 100 to be at least one of a state of blockage of pipe/brush flow paths, a state of foreign substances stuck in a brush drum, and a state of requesting cleaning for pre-motor filter/dustbin. Accordingly, the processor 3012 may output, as diagnosis result information via the user interface 1700, information about items requesting a check (or check items) including the state of blockage of pipe/brush flow paths, the state of foreign substances stuck in a brush drum, and the state of requesting cleaning for pre-motor filter/dustbin. The pipe indicates the extension tube 3000. The pre-motor filter indicates the filter unit 1300. The brush drum indicates the drum 2001 included in the brush device 2000. The processor 3012 may read reference values stored in the memory 3011, and may determine the state of the vacuum cleaner 100 by comparing the read reference values with the currently detected flow path pressure value and brush motor current value.

Referring to the table of FIG. 4, when the brush motor current value is between 0.46 and 1.0A, and the flow path pressure value is between 5180 and 751Pa, the processor 3012 may determine that the state of the vacuum cleaner 100 is an abnormal state (a state requiring inspection). The reference values with which the state of the vacuum cleaner 100 is determined as the abnormal state when the brush motor current value is between 0.46 and 1.0A, and the flow path pressure value is between 5180 and 751Pa are stored in the memory 3011. In this regard, the processor 3012 may determine a cause of the abnormal state of the vacuum cleaner 100 to be at least one of a state of blockage of pipe/brush flow paths and a state of requesting cleaning for pre-motor filter/dustbin. Accordingly, the processor 3012 may output, as diagnosis result information via the user interface 1700, information about items requesting a check (or check items) including the state of blockage of pipe/brush flow paths and the state of requesting cleaning for pre-motor filter/dustbin. The processor 3012 may read reference values stored in the memory 3011, and may determine the state of the vacuum cleaner 100 by comparing the read reference values with the currently detected flow path pressure value and brush motor current value.

Referring to the table of FIG. 4, when the brush motor current value is between 0.1 and 0.45A, and the flow path pressure value is between 5180 and 751Pa, the processor 3012 may determine that the state of the vacuum cleaner 100 is an abnormal state (a state requesting inspection). The reference values with which the state of the vacuum cleaner 100 is determined as the abnormal state when the brush motor current value is between 0.1 and 0.45A, and the flow path pressure value is between 5180 and 751Pa are stored in the memory 3011. In this regard, the processor 3012 may determine a cause of the abnormal state of the vacuum cleaner 100 to be at least one of a state of blockage of pipe/brush flow paths, a drum assembly state check, and a state of requesting cleaning for pre-motor filter/dustbin. Accordingly, the processor 3012 may output, as diagnosis result information via the user interface 1700, information about items requesting a check (or check items) including the state of blockage of pipe/brush flow paths, the drum assembly state check, and the state of requesting cleaning for pre-motor filter/dustbin. The drum indicates the drum 2001 included in the brush device 2000. The processor 3012 may read reference values stored in the memory 3011, and may determine the state of the vacuum cleaner 100 by comparing the read reference values with the currently detected flow path pressure value and brush motor current value.

Referring to the table of FIG. 4, when the brush motor current value is between 1.1 and 2.4A, and the flow path pressure value is between 750 and 401Pa, the processor 3012 may determine that the state of the vacuum cleaner 100 is an abnormal state (a state requesting inspection). The reference values with which the state of the vacuum cleaner 100 is determined as the abnormal state when the brush motor current value is between 1.1 and 2.4A, and the flow path pressure value is between 750 and 401Pa are stored in the memory 3011. In this regard, the processor 3012 may determine a cause of the abnormal state of the vacuum cleaner 100 to be a state of foreign substances stuck in a brush drum. Accordingly, the processor 3012 may output, as diagnosis result information via the user interface 1700, information about items requesting a check (or check items) including the state of foreign substances stuck in a brush drum. The processor 3012 may read reference values stored in the memory 3011, and may determine the state of the vacuum cleaner 100 by comparing the read reference values with the currently detected flow path pressure value and brush motor current value.

Referring to the table of FIG. 4, when the brush motor current value is between 1.1 and 2.4A, and the flow path pressure value is between 400 and 21Pa, the processor 3012 may determine that the state of the vacuum cleaner 100 is an abnormal state (a state requesting inspection). The reference values with which the state of the vacuum cleaner 100 is determined as the abnormal state when the brush motor current value is between 1.1 and 2.4A, and the flow path pressure value is between 400 and 21Pa are stored in the memory 3011. In this regard, the processor 3012 may determine a cause of the abnormal state of the vacuum cleaner 100 to be at least one of a state of foreign substances stuck in a brush drum and a state of requesting cleaning for pre-motor filter/dustbin. Accordingly, the processor 3012 may output, as diagnosis result information via the user interface 1700, information about items requesting a check (or check items) including the state of foreign substances stuck in a brush drum and the state of requesting cleaning for pre-motor filter/dustbin. The processor 3012 may read reference values stored in the memory 3011, and may determine the state of the vacuum cleaner 100 by comparing the read reference values with the currently detected flow path pressure value and brush motor current value.

Referring to the table of FIG. 4, when the brush motor current value is between 0.46 and 1.0A, and the flow path pressure value is between 400 and 21Pa, the processor 3012 may determine that the state of the vacuum cleaner 100 is an abnormal state (a state requesting inspection). The reference values with which the state of the vacuum cleaner 100 is determined as the abnormal state when the brush motor current value is between 0.46 and 1.0A, and the flow path pressure value is between 400 and 21Pa are stored in the memory 3011. In this regard, the processor 3012 may determine a cause of the abnormal state of the vacuum cleaner 100 to be a state of requesting cleaning for pre-motor filter/dustbin. Accordingly, the processor 3012 may output, as diagnosis result information via the user interface 1700, information about items requesting a check (or check items) including the state of requesting cleaning for pre-motor filter/dustbin. The processor 3012 may read reference values stored in the memory 3011, and may determine the state of the vacuum cleaner 100 by comparing the read reference values with the currently detected flow path pressure value and brush motor current value.

Referring to the table of FIG. 4, when the brush motor current value is between 0.1 and 0.45A, and the flow path pressure value is between 400 and 21Pa, the processor 3012 may determine that the state of the vacuum cleaner 100 is an abnormal state (a state requesting inspection). The reference values with which the state of the vacuum cleaner 100 is determined as the abnormal state when the brush motor current value is between 0.1 and 0.45A, and the flow path pressure value is between 400 and 21Pa are stored in the memory 3011. In this regard, the processor 3012 may determine a cause of the abnormal state of the vacuum cleaner 100 to be at least one of a state of requesting a drum assembly state check and a state of requesting cleaning for pre-motor filter/dustbin. Accordingly, the processor 3012 may output, as diagnosis result information via the user interface 1700, information about items requesting a check (or check items) including the state of requesting a drum assembly state check and the state of requesting cleaning for pre-motor filter/dustbin. The processor 3012 may read reference values stored in the memory 3011, and may determine the state of the vacuum cleaner 100 by comparing the read reference values with the currently detected flow path pressure value and brush motor current value.

Referring to the table of FIG. 4, when the brush motor current value is between 0.1 and 0.45A, and the flow path pressure value is between 750 and 401Pa, the processor 3012 may determine that the state of the vacuum cleaner 100 is an abnormal state (a state requesting inspection). The reference values with which the state of the vacuum cleaner 100 is determined as the abnormal state when the brush motor current value is between 0.1 and 0.45A, and the flow path pressure value is between 750 and 401Pa are stored in the memory 3011. In this regard, the processor 3012 may determine a cause of the abnormal state of the vacuum cleaner 100 to be a state of requesting a drum assembly state check. Accordingly, the processor 3012 may output, as diagnosis result information via the user interface 1700, information about items requesting a check (or check items) including the state of requesting a drum assembly state check. The processor 3012 may read reference values stored in the memory 3011, and may determine the state of the vacuum cleaner 100 by comparing the read reference values with the currently detected flow path pressure value and brush motor current value.

A high load shown in FIG. 4 corresponds to high current (a high brush motor current value) in the relation between the current and the pressure shown in FIG. 1C, and a low load shown in FIG. 4 corresponds to low current (a low brush motor current value) in the relation between the current and the pressure shown in FIG. 1C. The numerical values shown in FIG. 4 are merely for understanding, and the present disclosure is not limited thereto.

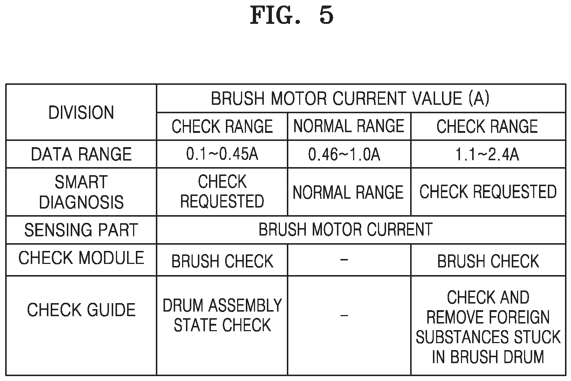

FIG. 5 shows an example of a self-diagnosis table for the vacuum cleaner 100, based on a current value of the motor 2004 of the brush device 2000 (or a brush motor current value), according to an embodiment of the present disclosure. FIG. 5 shows the example in which the brush device 2000 is a fuzzy brush, and a state o the vacuum cleaner 100 is a no-load state. The numerical values shown in FIG. 5 are merely for understanding, and the present disclosure is not limited thereto. Also, when a type of the brush device 2000 is not the fuzzy brush, the numerical values shown in FIG. 5 may be defined to be different values.

Referring to FIG. 5, when the brush motor current value is included between 0.1 to 0.45A or between 1.1 and 2.4A, the processor 3012 may determine that the state of the vacuum cleaner 100 is an abnormal state (a state requesting inspection). When a detected current value of the motor 2004 is included between 0.1 and 0.45A, the processor 3012 may determine that it is requested to check the brush device 2000. Here, information about a diagnosis result (or check guide information) may include a drum assembly state check, but the present disclosure is not limited thereto. For example, a check as to whether a drum rotates may be provided as the check guide information. When the brush motor current value is included between 1.1 and 2.4A, the processor 3012 may determine that it is requested to check the brush device 2000. Here, information about a diagnosis result (or check guide information) may include guide information indicating "foreign substances are stuck in brush drum. Remove after check".

In this regard, the processor 3012 may provide detailed guide information about how to remove foreign substances from the brush drum. When a user input for requesting detailed guide information is received, the processor 3012 may provide the detailed guide information about how to remove foreign substances from the brush drum. In order to promote understanding, FIG. 5 illustrates the example in which the brush motor current value is between 0.1 and 2.4A, but it may be implemented in such a manner that a range of a brush motor current value, which requests a check, is stored as being equal to or less than 0.45A and equal to or greater than 1.1A in the memory 3011, and the processor 3012 determines that a check is requested when the brush motor current is equal to or less than 0.45A or is equal to or greater than 1.1A. When it is determined that the check for the brush device 2000 is requested, the processor 3012 may stop an operation of the brush device 2000.

With reference to FIG. 5, when a brush motor current value A of the vacuum cleaner 100 is included between 0.46 and 1.0A, the processor 3012 may determine a state of the vacuum cleaner 100 as a normal state. Here, the state of the vacuum cleaner 100 is a no-load state, as disclosed in FIG. 1C.

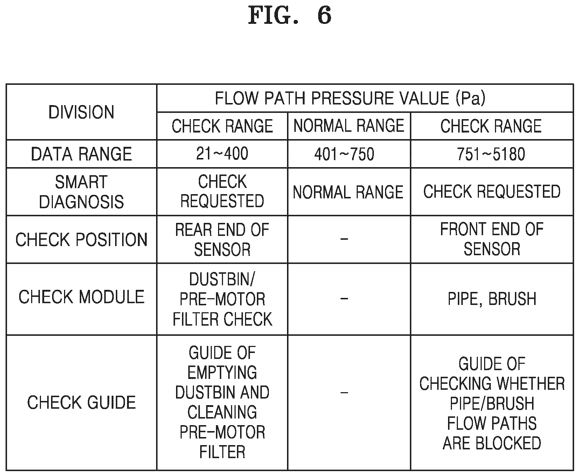

FIG. 6 shows an example of a self-diagnosis table for the vacuum cleaner 100, based on a flow path pressure value of the vacuum cleaner 100, according to an embodiment of the present disclosure. FIG. 6 shows the example in which the brush device 2000 is a fuzzy brush, and a state of the vacuum cleaner 100 is a no-load state. The numerical values shown in FIG. 6 are merely for understanding, and the present disclosure is not limited thereto.

Referring to FIG. 6, when a flow path pressure value Pa of the vacuum cleaner 100 is between 401 and 750 Pa, the processor 3012 determines a state of the vacuum cleaner 100 as a normal state. Here, the state of the vacuum cleaner 100 is a no-load state, as disclosed in FIG. 1C. When the flow path pressure value Pa of the vacuum cleaner 100 is between 21 and 400 Pa, the processor 3012 may diagnose that a state of the vacuum cleaner 100 is an abnormal state requesting a check. In this regard, the processor 3012 may determine a check item to include at least one of a state check for the dustbin 1200 and a state check for the filter 1300, may determine a check module to be the dustbin 1200 and the filter 1300, and may determine a check position to be the rear end of the pressure sensor 1400. Here, check guide information may include guide information indicating to empty the dustbin 1200 and clean the filter 1300.

Referring to FIG. 6, when the flow path pressure value Pa of the vacuum cleaner 100 is between 751 and 5180 Pa, the processor 3012 may diagnose that a state of the vacuum cleaner 100 is an abnormal state requesting a check. In this regard, the processor 3012 may determine a check item to include at least one of a pipe (the extension tube 3000) and the brush device 2000, may determine a check module to be at least one of the pipe (the extension tube 3000) and the brush (the brush device 2000), and may determine a check location to be the front end of the pressure sensor 1400. Here, check guide information may include guide information indicating to check whether flow paths of the pipe and the brush are blocked.

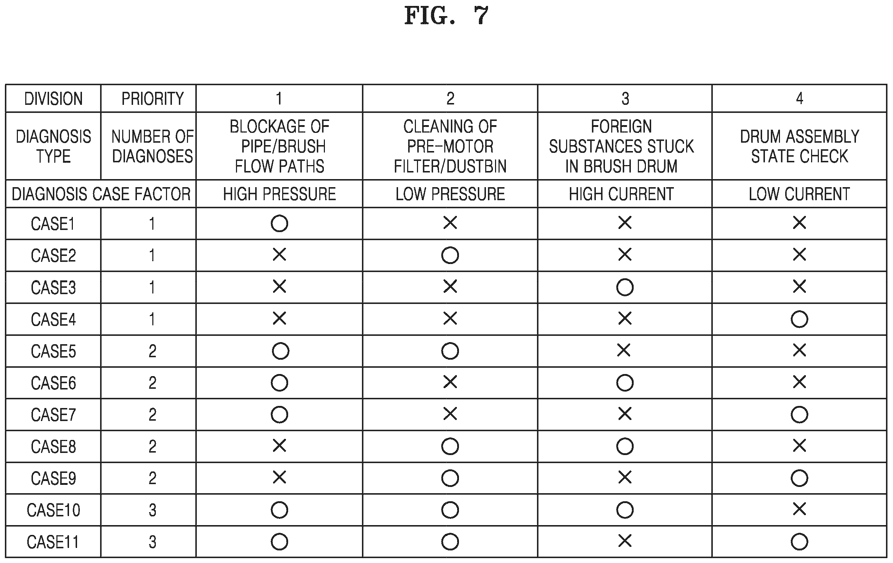

FIG. 7 shows an example of self-diagnosis types and priorities, according to an embodiment of the present disclosure.

Referring to FIG. 7, self-diagnosis types (or self-diagnosis items) according to an embodiment of the present disclosure may include a pipe (the extension tube 3000)/brush (the brush device 2000) flow path blockage item, a pre-motor filter (or the filter unit 1300)/the dustbin 1200 cleaning item, an item of foreign substances stuck in the brush drum 2001 (or the rotary brush 2002), and a drum 2001 (or the rotary brush 2002) assembly state check item, but the present disclosure is not limited thereto. When a plurality of types (or items) are diagnosed from among the self-diagnosis types, the pipe/brush flow path blockage item may have a highest priority 1, and the drum 2001 assembly state check item may have a lowest priority 4. In FIG. 7, a priority number 1 indicates a highest priority, and a priority number 4 indicates a lowest priority. Therefore, the priorities shown in FIG. 7 indicates that the priorities are in order of 1>2>3>4. For example, the priorities may be set in order of the pipe/brush flow path blockage item, the pre-motor filter /dustbin cleaning item, the item of foreign substances stuck in the brush drum, and the drum assembly state check item, but the priorities are not limited thereto.

A pressure shown in FIG. 7 is a flow path pressure value, and current is a brush motor current value.

In the case 1 shown in FIG. 7, when the pressure value (the flow path pressure value) is detected as being higher than a reference value, the processor 3012 may determine a diagnosis type as the pipe/brush flow path blockage item, and may provide guide information (e.g., Please check whether pipe and brush are blocked.) about it.

In the case 2 shown in FIG. 7, when the pressure value (the flow path pressure value) is detected as being lower than the reference value, the processor 3012 may determine a diagnosis type as the pre-motor filter /the dustbin 1200 cleaning item, and may provide guide information (e.g., Please clean the pre-motor filter and the dustbin 1300.) about it.

In the case 3 shown in FIG. 7, when the current value (the brush motor current value) is detected as being higher than the reference value, the processor 3012 may determine a diagnosis type as the item of foreign substances stuck in the brush drum, and may provide guide information (e.g., Please remove foreign substances from the drum 2001.) about it.

In the case 4 shown in FIG. 7, when the current value (the brush motor current value) is detected as being lower than the reference value, the processor 3012 may determine a diagnosis type as the drum assembly state check item, and may provide guide information (e.g., Please assemble well the drum 2001.) about it.

In the case 5 shown in FIG. 7, when the pressure value (the flow path pressure value) is detected as being higher than the reference value, the processor 3012 may determine a diagnosis type as the pipe/brush flow path blockage item, and may provide guide information about it. After an action corresponding thereto is performed, when a pressure value is detected as being lower than the reference value, according to a result of checking the pressure value and a current value, the processor 3012 may determine a diagnosis type as the pre-motor filter/dustbin cleaning item, and may provide guide information about it. The processor 3012 may determine that the action has been performed, based on whether a corresponding element (e.g., the pre-filter motor or the dustbin) is mounted, but the present disclosure is not limited thereto. For example, the processor 3012 may determine that the action has been performed, after an elapse of a preset time. For example, the processor 3012 may determine that the action has been performed, according to a user input (e.g., the user input indicating that the action has been performed). When the action is not practically performed, the processor 3012 may detect a pressure value and a current value of the same condition.

In the case 6 shown in FIG. 7, when the pressure value (the flow path pressure value) is detected as being higher than the reference value, the processor 3012 may determine a diagnosis type as the pipe/brush flow path blockage item, and may provide guide information about it. After an action corresponding thereto is performed, when a current value is detected as being higher than the reference value, according to a result of checking the pressure value and a current value, the processor 3012 may determine a diagnosis type as the item of foreign substances stuck in the drum, and may provide guide information about it.

In the case 7 shown in FIG. 7, when the pressure value (the flow path pressure value) is detected as being higher than the reference value, the processor 3012 may determine a diagnosis type as the pipe/brush flow path blockage item, and may provide guide information about it. After an action corresponding thereto is performed, when a current value is detected as being lower than the reference value, according to a result of checking the pressure value and a current value, the processor 3012 may determine a diagnosis type as the drum assembly state check item, and may provide guide information about it.

In the case 8 shown in FIG. 7, when the pressure value (the flow path pressure value) is detected as being lower than the reference value, the processor 3012 may determine a diagnosis type as the pre-motor filter/dustbin cleaning item, and may provide guide information about it. After an action corresponding thereto is performed, when a current value is detected as being higher than the reference value, according to a result of checking the pressure value and a current value, the processor 3012 may determine a diagnosis type as the item of foreign substances stuck in the drum, and may provide guide information indicating to remove foreign substances from the drum 2001.

In the case 9 shown in FIG. 7, when the pressure value (the flow path pressure value) is detected as being lower than the reference value, the processor 3012 may determine a diagnosis type as the pre-motor filter/dustbin cleaning item, and may provide guide information (e.g., Please clean the pre-motor filter and the dustbin 1300.) about it. After an action corresponding thereto is performed, when a current value is detected as being lower than the reference value, according to a result of checking the pressure value and a current value, the processor 3012 may determine a diagnosis type as the drum assembly state check item, and may provide guide information (e.g., Please assemble well the drum 2001.) about it.

In the case 10 shown in FIG. 7, when the pressure value (the flow path pressure value) is detected as being higher than the reference value, the processor 3012 may determine a diagnosis type as the pipe/brush flow path blockage item, and may provide guide information about it. After an action corresponding thereto is performed, when a pressure value is detected as being lower than the reference value, according to a result of checking the pressure value and a current value, the processor 3012 may determine a diagnosis type as the pre-filter motor/dustbin cleaning item, and may provide guide information about it. After the action corresponding thereto is performed, when a current value is detected as being higher than the reference value, according to a result of checking the pressure value and the current value, the processor 3012 may determine a diagnosis type as the item of foreign substances stuck in the drum, and may provide guide information about it.

In the case 11 shown in FIG. 7, when the pressure value (the flow path pressure value) is detected as being higher than the reference value, the processor 3012 may determine a diagnosis type as a pipe/brush blockage item, and may provide guide information about it. After an action corresponding thereto is performed, when a pressure value is detected as being lower than the reference value, according to a result of checking the pressure value and a current value, the processor 3012 may determine a diagnosis type as the pre-filter motor/dustbin cleaning item, and may provide guide information about it. After the action corresponding thereto is performed, when a current value is detected as being lower than the reference value, according to a result of checking the pressure value and the current value, the processor 3012 may determine a diagnosis type as the drum assembly state check item, and may provide guide information about it.

In the case 6, the case 8, and the case 9 shown in FIG. 7, the diagnosis types (or the check items) may not be sequentially determined, and a plurality of diagnosis types (e.g., the pipe/brush flow path blockage item and the pre-motor filter/dustbin cleaning item) may be simultaneously determined.

The vacuum cleaner 100 of the present disclosure may store a plurality of pieces of corresponding data or information in the memory 3011 so as to perform the self-diagnoses shown in FIGS. 4 and 7. Also, a program for performing self-diagnosis of the vacuum cleaner 100 according to an embodiment of the present disclosure may be stored in the memory 3011. The vacuum cleaner 100 may store the program in the memory 3011.

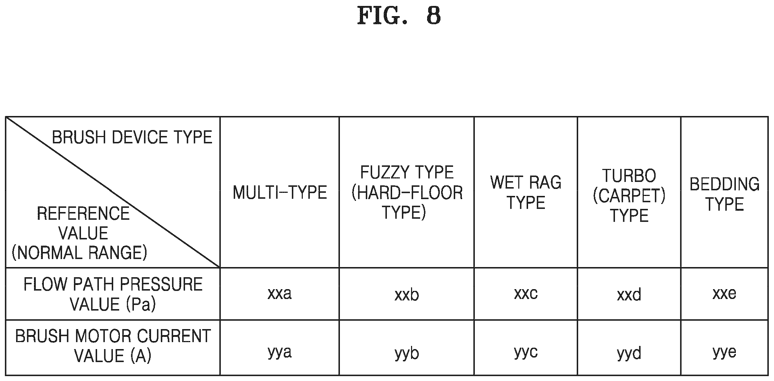

FIG. 8 is a table for describing that a reference value for a self-diagnosis with respect to a flow path pressure value of the vacuum cleaner 100 and a reference value for a self-diagnosis with respect to a current value of the motor 2004 included in the brush device 2000 (a brush motor current value) are differently set according to types of the brush device 2000, according to an embodiment of the present disclosure. Each of "xxa, xxb, xxc, xxd, xxe" shown in FIG. 8 may include the table as shown in FIG. 6, and each of "yya, yyb, yyc, yyd, yye" show in FIG. 8 may include the table as shown in FIG. 5. However, FIGS. 5 and 6 correspond to a case in which the brush device 2000 is a fuzzy brush device, and thus, values shown in FIGS. 5 and 6 may be different from values of tables respectively included in "xxa, xxb, xxc, xxd, xxe, yya, yyb, yyc, yyd, yye". For example, xxb with a fuzzy type shown in FIG. 8 may include a table that matches a table shown in FIG. 6, and yyb with a fuzzy type shown in FIG. 8 may include a table that matches a table shown in FIG. 5.

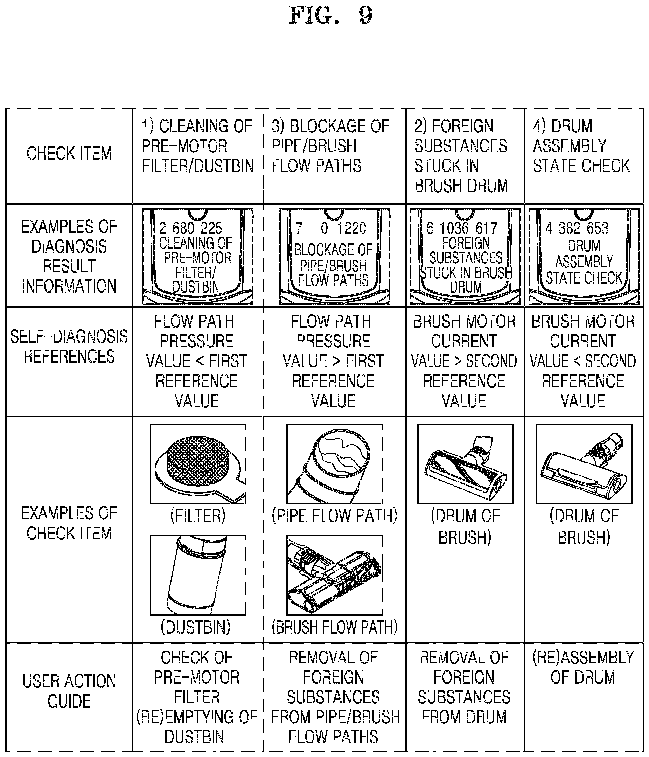

FIG. 9 shows an example of relations between self-diagnosis items (or check items), self-diagnosis result information, a self-diagnosis standard, state examples of the check items, and user action guides, for the vaccum cleaner 100 according to an embodiment of the present disclosure.

Referring to FIG. 9, the self-diagnosis items (or the check items) may include pre-motor filter /dustbin cleaning, pipe/brush flow path blockage, foreign substances stuck in a brush drum, and a drum assembly state check. An example of displaying information about a diagnosis result for each check item may be provided via the user interface 1700. The self-diagnosis result information may include information about a check item (e.g., pre-motor filter /dustbin cleaning, 2), a flow path pressure value (e.g., 225), and a current value of a motor.

Referring to FIG. 9, a self-diagnosis reference may be diagnosed according to whether a flow path pressure value is greater or less than (or higher or lower than) a reference value (a first reference value) corresponding to a flow path pressure value which is stored in the memory 3011, or may be diagnosed according to whether a motor current value (a brush motor current value) of the brush device 2000 is greater or less than (or higher or lower than) a reference value (a second reference value) corresponding to a motor current value of the brush device 2000 which is stored in the memory 3011.

Referring to FIG. 9, an example of a check item state may be provided via the user interface 1700 or the other electronic device 5000. When the diagnosis result is the pre-motor filter /dustbin cleaning, a user action guide to the diagnosis result may provide a guide (or guide information) indicating "to check pre-motor filter and empty dustbin". When the diagnosis result is the pipe/brush flow path blockage, a user action guide to the diagnosis result may provide a guide (or guide information) indicating "to remove foreign substances from flow path of pipe/brush". When the diagnosis result is the foreign substances stuck in the brush drum, a user action guide to the diagnosis result may provide a guide (or guide information) indicating "to remove foreign substances from drum". When the diagnosis result is the drum assembly state check, a user action guide to the diagnosis result may provide guide information indicating to reassemble the drum.

FIG. 10 is a diagram for describing the brush device 2000, according to an embodiment of the present disclosure.

Referring to FIG. 10, the brush device 2000 may include the drum 2001 having the rotary brush 2002 attached thereto, the motor 2004 for rotating the drum 2001, the motor controller 2004 for controlling an operation of the motor 2004, and the suction port 2003 for sucking up air including foreign substances, but the present disclosure is not limited thereto. The motor 2004 of the brush device 2000 may be provided in the drum 2001 or in the outside of the drum 2001. When the motor 2004 is provided in the outside of the drum 2001, the drum 2001 may receive power from the motor 2001 via a belt. The motor 2004 may be configured as a BLDC motor in the drum 2001. When it is the BLDC motor, the RPM of the motor 2004 and the RPM of the drum 2001 may be equal. A configuration of the motor 2004 included in the brush device 2000 is not limited to what is shown in FIG. 11. For example, when the brush device 2000 is a fuzzy brush type, the motor 2004 may be configured as a combination in which a permanent magnet direct current (PMDC) motor and a planetary gear are coupled to the drum 2001. Such configured motor may be expressed as a planetary geared motor. The planetary gear is provided to adjust the RPM of the drum 2001, according to a gear ratio. In the planetary geared motor, the RPM of the motor 2004 and the RPM of the drum 2001 may have a certain ratio.

A type of the brush device 2000 may vary. For example, the brush device 2000 may include a multi-type, a hard-floor type (or a fuzzy type), a wet rag type, a turbo (carpet) type, a bedding type, a scraper type, a gap type, a pet type, etc, but the present disclosure is not limited thereto.

FIG. 11 illustrates an example of self-diagnosis result information output via the user interface 1700, according to an embodiment of the present disclosure. FIG. 11 illustrates the example in which a plurality of pieces of information about a plurality of items are sequentially provided when the self-diagnosis result information includes the plurality of items. For example, the processor 3012 may output information indicating "It is requested to check a plurality of items" via the user interface 1700, in 1711, may display "pipe/brush flow path blockage" via the user interface 1700, in 1712, may display "foreign substances stuck in brush" via the user interface 1700, in 1713, and may display "pre-motor filter/dustbin cleaning" via the user interface 1700, in 1714.

FIG. 11 illustrates the example in which information is displayed via the user interface 1700, but an embodiment of the present disclosure is not limited thereto. For example, when information is displayed via an audio output unit (not shown) included in the output interface of the user interface 1700, an audio signal may also be output to guide a check. The output audio signal may be configured as a simple alarm, but the present disclosure is not limited thereto. For example, the output audio signal may be an audio signal that is equal to the displayed information.

FIG. 12 illustrates an example of self-diagnosis result information output via the user interface 1700, according to an embodiment of the present disclosure. FIG. 12 illustrates the example in which a plurality of pieces of information about a plurality of items are simultaneously provided when the self-diagnosis result information includes the plurality of items.

Referring to FIG. 12, the processor 3012 may output information indicating "It is requested to check a plurality of items" via the user interface 1700, in 1721, and may simultaneously display information of diagnosis results about "1. pipe/brush flow path blockage and 2. foreign substances stuck in brush drum" via the user interface 1700, in 1722. FIG. 12 illustrates the example in which information is displayed via the user interface 1700, but an embodiment of the present disclosure is not limited thereto. For example, when information is displayed via an audio output unit (not shown) included in the output interface of the user interface 1700, an audio signal may also be output to guide a check. The output audio signal may be configured as a simple alarm, but the present disclosure is not limited thereto. For example, the output audio signal may be an audio signal that is equal to the displayed information.

FIG. 13 is a block diagram of functions of the station 4000, according to an embodiment of the present disclosure.

Referring to FIG. 13, the station 4000 includes a communication interface 4100, a user interface 4200, a memory 4300, a processor 4400, a dust discharge motor 4500, and a battery charge adaptor 4600, but a configuration of the station 4000 is not limited to what is shown in FIG. 13. Elements of the station 400 may be more or fewer than the elements shown in FIG. 13.

According to an embodiment of the present disclosure, some or all the communication interface 4100, the user interface 4200, the memory 4300, and the processor 4400 may be implemented as a chip, and the processor 4400 may include one or more processors.

The communication interface 4100 is an element to transmit and receive a signal (a control command and data, etc.) to an external device by wire or wirelessly, and may be configured to include a communication chipset for supporting various communication protocols. According to an embodiment, the communication interface 4100 may include a Wi-Fi module 4110 and a BLE module 4120 to support Wi-Fi communication and BLE communication. Accordingly, the station 4000 may perform communication with an external server or the other electronic device 5000 via Wi-Fi, and may perform communication with the cleaner body 1000 or the other electronic device 5000 via BLE.

The communication interface 4100 may receive a signal from the outside and output it to the processor 4400, or may transmit a signal output from the processor 4400 to the outside.

The user interface 4200 may include an input interface (e.g., a power button, a touchscreen, a function button, a microphone, etc.) for receiving an input of a control command or information from a user, and an output interface (e.g., a display panel, a speaker, etc.) for displaying an execution result of an operation under the control of a user, or a state of the station 4000.

The memory 4300 is a configuration to store various programs or data, and may be configured as a storage medium or a combination of storage media including a read-only memory (ROM), a random access memory (RAM), a hard disk, a compact disc read only memory (CD-ROM), and a digital versatile disc (DVD). The memory 4300 may not separately exist and may be configured to be included in the processor 4400 to be described below. The memory 4300 may be configured as a volatile memory, a non-volatile memory or a combination of the volatile memory and the non-volatile memory. The memory 4300 may provide stored data to the processor 4400, according to a request from the processor 4400. According to an embodiment, the memory 4300 may store a program that transmits information related to a self-diagnosis (diagnosis result information) received from the cleaner body 1000 to the other electronic device 5000.

The processor 4400 is a configuration for controlling a series of processes for causing the station 4000 to operate, and may include one or more processors. The one or more processors may each be a general-purpose processor such as a central processing unit (CPU), an application processor (AP), a digital signal processor (DSP), etc., a graphic-dedicated processor such as a graphics processing unit (GPU), a video processing unit (VPU), etc., or an artificial intelligence-dedicated processor such as a neural processing unit (NPU). For example, when the one or more processors are each an artificial intelligence-dedicated processor, the artificial intelligence-dedicated processor may be designed to have a hardware structure specialized for processing a particular artificial intelligence model.

The processor 4400 may record data to the memory 4300 or may read data stored in the memory 4300, and in particular, the processor 4400 may execute a program stored in the memory 4300 to process data according to a predefined operation rule or an artificial intelligence model. According to an embodiment of the present disclosure, the processor 4400 may execute the program stored in the memory 4300 to perform a process of transmitting self-diagnosis result information received from the cleaner body 1000 to the other electronic device 5000.

The dust discharge motor 4500 is configured to perform an operation of discharging dusts from the dustbin 1200 mounted to the cleaner body 1000, when the cleaner body 1000 is combined with the station 4000. According to an embodiment, the dust discharge motor 4500 may provide a driving force to cause a door (or a cover) of the dustbin 1200 mounted to the cleaner body 1000 to open so as to allow dusts in the dustbin 1200 to be discharged.

The battery charge adaptor 4600 is configured to charge the battery 1500 mounted to the cleaner body 1000. According to an embodiment, when the cleaner body 1000 is combined with the station 4000, the battery charge adaptor 4600 of the station 4000 may contact a terminal for charging the battery 1500, and thus, may provide power for charging the battery 1500.

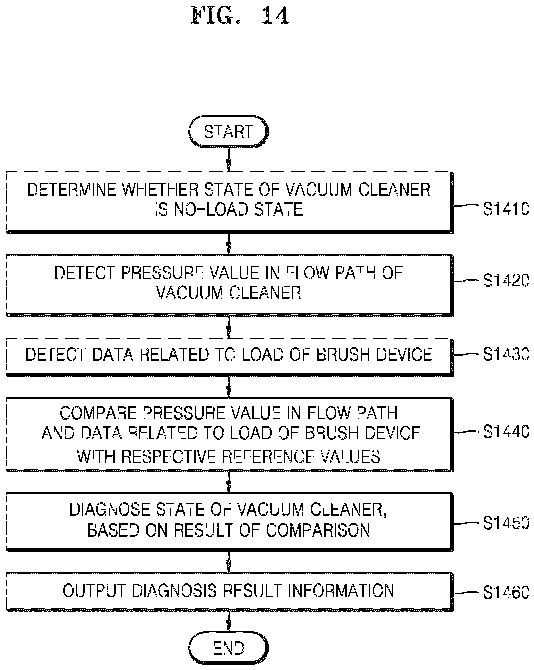

FIG. 14 is an operation flowchart of a self-diagnosis method of the vacuum cleaner 100, according to an embodiment of the present disclosure.

In operation S1410, the processor 3012 of the cleaner body 1000 may determine whether a state of the vacuum cleaner 100 is a no-load state. For example, when a state in which the brush device 2000 is not affected by a cleaning-target surface is detected, the processor 3012 may determine the state of the vacuum cleaner 100 as the no-load state (or a lifted state). The state in which the brush device 2000 is not affected by the cleaning-target surface may be detected, as described with reference to FIGS. 1B and 1C, based on a flow path pressure value of the vacuum cleaner 100 obtained by the pressure sensor 1400 and the current value of the motor 2004 of the brush device 2000.

When the state of the vacuum cleaner 100 is determined as the no-load state, in operation S1420, the processor 3012 of the cleaner body 1000 may detect a pressure value (or a flow path pressure value) in a flow path of the vacuum cleaner 100, based on the pressure sensor 1400 mounted to a portion of the suction duct 40 of the cleaner body 1000. The pressure value in the flow path of the vacuum cleaner 100 is a difference (or a difference value) between a first pressure value and a second pressure value, the first pressure value being obtained from the pressure sensor 1400 before the vacuum cleaner 100 is operated and the second pressure value obtained from the pressure sensor 1400 after the vacuum cleaner 100 is operated with preset power consumption. Accordingly, the processor 3012 may obtain the first pressure value and then obtain the second pressure value from the pressure sensor 1400, and may detect the difference (or the difference value) between the first pressure value and the second pressure value, thereby obtaining the pressure value in the flow path. That the first pressure value is obtained from the pressure sensor 1400 may indicate that the first pressure value is obtained by using the pressure sensor 1400. That the second pressure value is obtained from the pressure sensor 1400 may indicate that the second pressure value is obtained by using the pressure sensor 1400. That the first pressure value is obtained from the pressure sensor 1400 may indicate that the first pressure value is detected from the pressure sensor 1400. That the second pressure value is obtained from the pressure sensor 1400 may indicate that the second pressure value is detected from the pressure sensor 1400.

In operation S1430, the processor 3012 of the cleaner body 1000 may detect data related to a load of the brush device 2000. The data related to the load of the brush device 2000 may include a current value of the motor 2004 included in the brush device 2000, which is detected by using the load detection sensor 1134 included in the cleaner body 1000. Therefore, in operation S1430, the processor 3012 may detect the current value of the motor 2004 included in the brush device 2000.

In operation S1440, the processor 3012 of the cleaner body 1000 may compare the detected pressure value in the flow path of the vacuum cleaner 100 and the data related to the load of the brush device 2000 with respective reference values stored in the memory 3011 included in the cleaner body 1000. The reference values stored in the memory 3011 may be values set according to a type of the brush device 2000 and whether the vacuum cleaner 100 is operated, and for example, values as described above with reference to FIGS. 4 to 8 may be set.

In operation S1450, the processor 3012 of the cleaner body 1000 may diagnose a state of the vacuum cleaner 100, based on a result of the comparison. The diagnosis with respect to the state of the vacuum cleaner 100 by the processor 3012 may be performed as described above with reference to FIGS. 4 to 7, and FIG. 9. A diagnosis item for the state of the vacuum cleaner 100, based on the pressure value in the flow path of the vacuum cleaner 100 may be different from a diagnosis item for the state of the vacuum cleaner 100, based on the data related to the load of the brush device 2000. For example, the diagnosis item for the state of the vacuum cleaner 100, based on the pressure value in the flow path of the vacuum cleaner 100 may include a state of the filter unit 1300, a state of the dustbin 1200, a state of the extension tube 3000 (or the pipe), etc. For example, the diagnosis item for the state of the vacuum cleaner 100, based on the current value of the motor 2004 included in the brush device 2000 may include a check (e.g., whether the drum 2001 is assembled, whether the drum 2001 rotates, removal of foreign substances stuck in the drum 2001, etc.) of the drum 2001 of the brush device 2000.

In operation S1460, diagnosis result information may be output via the user interface 1700 included in the cleaner body 1000, by the processor 3012 of the cleaner body 1000. For example, when a plurality of check items are included in the diagnosis result information, the processor 3012 may simultaneously output a plurality of pieces of check item information via the user interface 1700. For example, as shown in FIG. 12, the plurality of pieces of check item information may be simultaneously output. For example, when the plurality of check items are included in the diagnosis result information, the processor 3012 may sequentially output the plurality of pieces of check item information via the user interface 1700. For example, as shown in FIG. 12, the plurality of pieces of check item information may be simultaneously output.

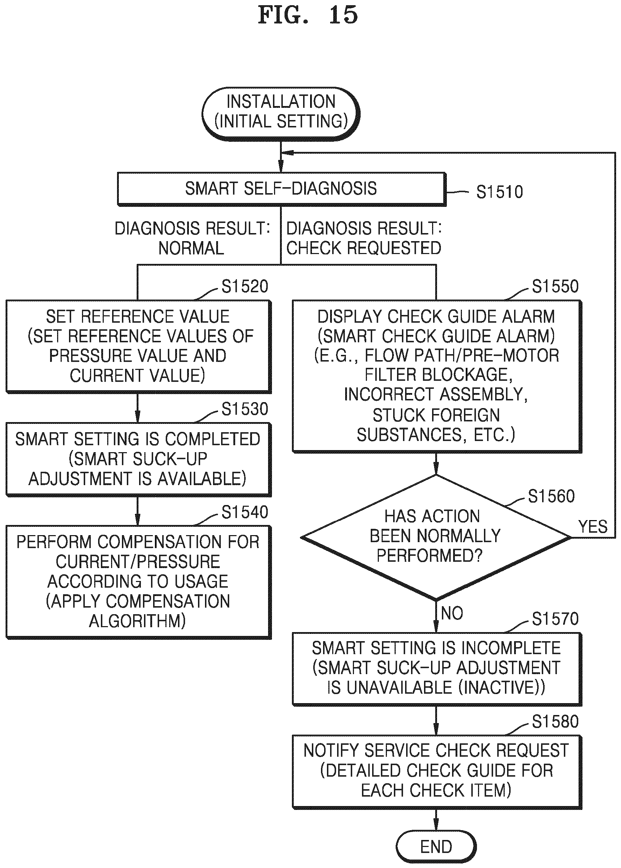

FIG. 15 is a flowchart of an operation of the vacuum cleaner 100 which includes a self-diagnosis method performed when the vacuum cleaner 100 is installed, according to an embodiment of the present disclosure.

In initial setting according to installation of the vacuum cleaner 100, in operation S1510, the cleaner body 1000 may perform a smart self-diagnosis. The smart self-diagnosis may be performed in a state in which the cleaner body 1000 and the brush device 2000 are connected to each other or a state in which the cleaner body 1000, the extension tube 3000, and the brush device 2000 are connected to each other. The smart self-diagnosis performed in operation S1510 may be performed as in the flowchart of FIG. 14. As a result of the self-diagnosis, when it is determined that a state of the vacuum cleaner 100 is a normal state, in operation S1520, the processor 3012 of the cleaner body 1000 may set a reference value. The reference value may include a flow path pressure value requested for the vacuum cleaner 100 to perform in a smart mode or an Al mode, and a current value of the motor 2004 of the brush device 2000. In operation S1530, when the smart setting is completed, the vacuum cleaner 100 is enabled to perform smart suck-up adjustment in the smart mode or the Al mode. In operation S1540, when the vacuum cleaner 100 operates in the smart mode or the Al mode, compensation for the current value of the motor 2004 of the brush device 2000 and the flow path pressure value according to usage may be performed by using a compensation algorithm stored in the memory 3011.

In operation S1510, as a result of performing the smart self-diagnosis on the vacuum cleaner 100, when it is determined that the state of the vacuum cleaner 100 is an abnormal state (or a state in which a check is requested), the processor 3012 may display a check guide alarm in operation S1550. The displayed check guide alarm may be output as in FIG. 11 or 12, but the present disclosure is not limited thereto. For example, the check guide alarm may be displayed in a manner that information about one check item is displayed via the user interface 1700. For example, the check guide alarm may be output as an audio signal. For example, the check guide alarm that is outputtable may include information of a flow path/pre-motor filter blockage, an incorrect assembly (incorrect assembly of the drum 2001 or the extension tube 3000), stuck foreign substances, etc..

In operation S1560, the processor 3012 of the cleaner body 1000 may determine whether an action for the check alarm has been normally performed. In operation S1560, the processor 3012 of the cleaner body 1000 may determine whether the action for the check alarm has been normally performed, according to the smart self-diagnosis performed in operation S1510. As a result of the determination, when it is determined that the action for the check alarm has not been normally performed, in operation S1570, the processor 3012 of the cleaner body 1000 may set incompletion of smart setting, and in operation S1580, may notify a service check request. When the incompletion of smart setting is set in operation S1570, the vacuum cleaner 100 is unable to perform smart suck-up adjustment. This may mean that the smart mode or the Al mode of the vacuum cleaner 100 becomes inactive. In operation S1580, the processor 3012 of the cleaner body 1000 may provide a detailed check guide for each check item via the user interface 1700 or the other electronic device 5000. That the detailed check guide for each check item is provided via the other electronic device 5000 may be performed by transmitting detailed check guide information for each check item via the station 4000.

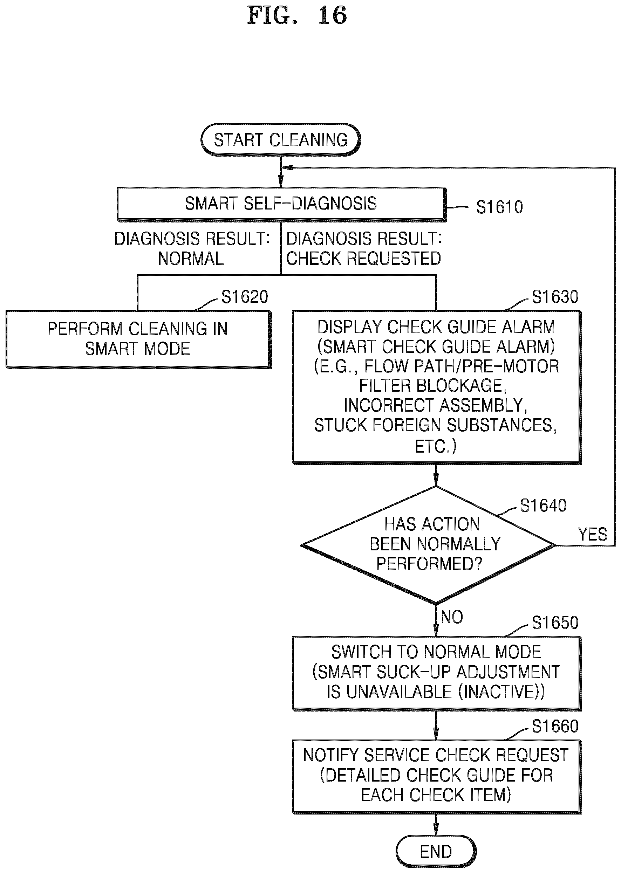

FIG. 16 is a flowchart of an operation of the vacuum cleaner 100 which includes a self-diagnosis method performed when the vacuum cleaner 100 is installed, according to an embodiment of the present disclosure.

When the vacuum cleaner 100 operates (cleaning start), in operation S1610, the cleaner body 1000 may perform a smart self-diagnosis. The smart self-diagnosis may be performed in a state in which the cleaner body 1000 and the brush device 2000 are connected to each other or a state in which the cleaner body 1000, the extension tube 3000, and the brush device 2000 are connected to each other. The smart self-diagnosis performed in operation S1610 may be performed as in the flowchart of FIG. 14. As a result of the self-diagnosis, when a state of the vacuum cleaner 100 is determined as a normal state, in operation S1620, the processor 3012 of the cleaner body 1000 may perform a cleaning operation in a smart mode or an Al mode.

As a result of performing the smart self-diagnosis on the vacuum cleaner 100 in operation S1610, when it is determined that the state of the vacuum cleaner 100 is an abnormal state (or a state in which a check is requested), the processor 3012 may display a check guide alarm in operation S1630. The displayed check guide alarm may be output as in FIG. 11 or 12, but the present disclosure is not limited thereto. For example, the check guide alarm may be displayed in a manner that information about one check item is displayed via the user interface 1700. For example, the check guide alarm may be output as an audio signal. For example, the check guide alarm that is outputtable may include information of a flow path/pre-motor filter blockage, an incorrect assembly (incorrect assembly of the drum 2001 or the extension tube 3000), stuck foreign substances, etc..

In operation S1640, the processor 3012 of the cleaner body 1000 may determine whether an action for the check alarm has been normally performed. In operation S1640, the processor 3012 of the cleaner body 1000 may determine whether the action for the check alarm has been normally performed, according to the smart self-diagnosis performed in operation S1610. As a result of the determination, when it is determined that the action for the check alarm has not been normally performed, in operation S1650, the processor 3012 of the cleaner body 1000 may switch to a normal mode. The normal mode is a mode in which power consumption of the suction motor 1110 and a rotation speed of the motor 2004 included in the brush device 2000 (or, a rotation speed of the drum 2001) are not changed, according to a condition of a cleaning-target surface and a cleaning environment. Therefore, smart suck-up adjustment may not be possible in the normal mode. This is because the smart mode is inactive.

In operation S1660, the processor 3012 of the cleaner body 1000 may notify a service check request. The processor 3012 of the cleaner body 1000 may provide a detailed check guide for each check item via the user interface 1700 or the other electronic device 5000. That the detailed check guide for each check item is provided via the other electronic device 5000 may be performed by transmitting detailed check guide information for each check item via the station 4000.

According to an embodiment of the present disclosure, provided is the vacuum cleaner 100 including the cleaner body 1000 and the brush device 2000 connected to the cleaner body 1000, wherein the cleaner body 1000 includes the user interface 1700 configured to output diagnosis result information for a state of the vacuum cleaner 100, the memory 3011 storing one or more instructions, and storing data for diagnosing the state of the vacuum cleaner 100, the pressure sensor 1400 mounted to a portion of the suction duct 40 included in the cleaner body 1000, and the at least one processor 3012.

According to an embodiment of the present disclosure, the at least one processor 3012 may be configured to execute the one or more instructions to determine whether the state of the vacuum cleaner 100 is a no-load state, when the state of the vacuum cleaner 100 is determined as the no-load state, detect a pressure value in a flow path of the vacuum cleaner 100, based on the pressure sensor 1400, detect data related to a load of the brush device 2000, compare the detected pressure value in the flow path of the vacuum cleaner 100 and the detected data related to the load of the brush device 2000 with reference values stored in the memory 3011, diagnose the state of the vacuum cleaner 100, based on a result of the comparing, and output the diagnosis result information about the diagnosing via the user interface 1700.

According to an embodiment of the present disclosure, when a state in which the brush device 2000 is not affected by a cleaning-target surface is detected, the at least one processor 3012 may be configured to determine the state of the vacuum cleaner 100 as the no-load state.

According to an embodiment of the present disclosure, the at least one processor 3012 may be configured to obtain a first pressure value from the pressure sensor 1400 before the vacuum cleaner 100 operates, obtain a second pressure value from the pressure sensor 1400 after the vacuum cleaner 100 operates with preset power consumption, and detect a difference between the first pressure value and the second pressure value as the pressure value in the flow path of the vacuum cleaner 100.

According to an embodiment of the present disclosure, the data related to the load of the brush device 2000 may include a current value of a motor included in the brush device 2000. According to an embodiment of the present disclosure, the current value of the motor included in the brush device 2000 may be detected by using the load detection sensor 1134 included in the cleaner body 1000.

According to an embodiment of the present disclosure, the pressure sensor 1400 may be located at at least one of an end of a straight portion of the suction duct 40 or a knee point between the straight portion and a curved portion of the suction duct 40.

According to an embodiment of the present disclosure, a diagnosis item for the state of the vacuum cleaner 100, based on the pressure value in the flow path of the vacuum cleaner 100 may be different from a diagnosis item for the state of the vacuum cleaner 100, based on the data related to the load of the brush device 2000.

According to an embodiment of the present disclosure, the reference values stored in the memory 3011 may be values set according to a type of the brush device 2000 and whether the vacuum cleaner 100 operates.

According to an embodiment of the present disclosure, when diagnosis result information includes a plurality of check items, the at least one processor 3012 may simultaneously output information about the plurality of check items via the user interface 1700. According to an embodiment of the present disclosure, when the diagnosis result information includes the plurality of check items, the at least one processor 30120 may sequentially output the information about the plurality of check items via the user interface 1700.

According to an embodiment of the present disclosure, a diagnosis result may include at least one of a state check for a flow path blockage in the brush device 2000, a state check for foreign substances stuck in the drum 2001 included in the brush device 2000, an assembly state check for the drum 2001 included in the brush device 2000, a state check for the dustbin included in the cleaner body 1000, a state check for a pre-motor filter included in the cleaner body 1000, or a state check for the extension tube 3000 between the cleaner body 1000 and the brush device 2000.

According to an embodiment of the present disclosure, a self-diagnosis method of the vacuum cleaner 100 including the cleaner body 1000 and the brush device 2000 connected to the cleaner body 1000 may include determining, by the at least one processor 3012 of the cleaner body 1000, whether a state of the vacuum cleaner 100 is a no-load state, when the state of the vacuum cleaner 100 is determined as the no-load state, detecting, by the at least one processor 3012, a pressure value in a flow path of the vacuum cleaner 100, based on the pressure sensor 1400 mounted to a portion of the suction duct 40 of the cleaner body 1000, detecting, by the at least one processor 3012, data related to a load of the brush device 2000, comparing, by the at least one processor 3012, the detected pressure value in the flow path of the vacuum cleaner 100 and the data related to the load of the brush device 2000 with reference values stored in the memory 3011 included in the cleaner body 1000, diagnosing, by the at least one processor 3012, the state of the vacuum cleaner 100, based on a result of the comparing; and outputting, by the at least one processor 3012, diagnosis result information about the diagnosing via the user interface 1700 included in the cleaner body 1000.

According to an embodiment of the present disclosure, the determining of whether the state of the vacuum cleaner 100 is the no-load state may include determining the state of the vacuum cleaner 100 as the no-load state, when a state in which the brush device 2000 is not affected by a cleaning-target surface is detected.

According to an embodiment of the present disclosure, the detecting of the pressure value in the flow path of the vacuum cleaner 100 may include obtaining a first pressure value from the pressure sensor 1400 before the vacuum cleaner 100 operates, obtaining a second pressure value from the pressure sensor 1400 after the vacuum cleaner 100 operates with preset power consumption; and detecting a difference between the first pressure value and the second pressure value as the pressure value in the flow path of the vacuum cleaner 100.

According to an embodiment of the present disclosure, the detecting of the data related to the load of the brush device 2000 may include detecting a current value of a motor included in the brush device 2000 by using the load detection sensor 1134 included in the cleaner body 1000.

According to an embodiment of the present disclosure, when the diagnosis result information includes a plurality of check items, the outputting of the diagnosis result information via the user interface 1700 included in the cleaner body 1000 may include simultaneously outputting information about the plurality of check items via the user interface 1700.

According to an embodiment of the present disclosure, when the diagnosis result information includes the plurality of check items, the outputting of the diagnosis result information via the user interface 1700 included in the cleaner body 1000 may include sequentially outputting the information about the plurality of check items via the user interface 1700.

A machine-readable storage medium may be provided in the form of a non-transitory storage medium. Here, the term "non-transitory storage medium" may mean that the storage medium is a tangible device and does not include signals (e.g., electromagnetic waves), and may mean that data may be permanently or temporarily stored in the storage medium. For example, the "non-transitory storage medium" may include a buffer in which data is temporarily stored.

According to an embodiment, the method according to various embodiments disclosed in the present specification may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user apparatuses (e.g., smartphones). In a case of online distribution, at least a portion of the computer program product (e.g., a downloadable application) may be at least temporarily stored or temporarily generated in a machine-readable storage medium such as a manufacturer's server, a server of an application store, or a memory of a relay server.

## Claims

1. A vacuum cleaner (100) comprising a cleaner body (1000) and a brush device (2000) connected to the cleaner body (1000),
wherein the cleaner body (1000) comprises:
a user interface (1700) configured to output diagnosis result information regarding a state of the vacuum cleaner (100);
a memory (3011) storing one or more instructions, and storing data for diagnosing the state of the vacuum cleaner (100);
a pressure sensor (1400) mounted to a portion of a suction duct (40) comprised in the cleaner body (1000); and
at least one processor (3012),
wherein the at least one processor (3012) is configured to execute the one or more instructions to
determine whether the state of the vacuum cleaner (100) is a no-load state,
when the state of the vacuum cleaner (100) is determined as the no-load state, detect a pressure value in a flow path of the vacuum cleaner (100), based on the pressure sensor (1400),
detect data related to a load of the brush device (2000),
compare the detected pressure value in the flow path of the vacuum cleaner (100) and the detected data related to the load of the brush device (2000) with reference values stored in the memory (3011),
diagnose the state of the vacuum cleaner (100), based on a result of the comparing, and
output the diagnosis result information about the diagnosing via the user interface (1700).

2. The vacuum cleaner (100) of claim 1, wherein, when a state in which the brush device (2000) is not affected by a cleaning-target surface is detected, the at least one processor (3012) is configured to determine the state of the vacuum cleaner (100) as the no-load state.

3. The vacuum cleaner (100) of claim 1 or 2, wherein the at least one processor (3012) is configured to
obtain a first pressure value from the pressure sensor (1400) before the vacuum cleaner (100) operates,
obtain a second pressure value from the pressure sensor (1400) after the vacuum cleaner (100) operates with preset power consumption, and detect a difference between the first pressure value and the second pressure value as the pressure value in the flow path of the vacuum cleaner (100).

4. The vacuum cleaner (100) of any one of claims 1 to 3, wherein the data related to the load of the brush device (2000) comprises a current value of a motor comprised in the brush device (2000).

5. The vacuum cleaner (100) of any one of claims 1 to 4, wherein the current value of the motor comprised in the brush device (2000) is detected by using a load detection sensor (1134) comprised in the cleaner body (1000).

6. The vacuum cleaner (100) of any one of claims 1 to 5, wherein the pressure sensor (1400) is located at at least one of an end of a straight portion of the suction duct (40) or a knee point between the straight portion and a curved portion of the suction duct (40).

7. The vacuum cleaner (100) of any one of claims 1 to 6, wherein a diagnosis item for the state of the vacuum cleaner (100), based on the pressure value in the flow path of the vacuum cleaner (100) is different from a diagnosis item for the state of the vacuum cleaner (100), based on the data related to the load of the brush device (2000).

8. The vacuum cleaner (100) of any one of claims 1 to 7, wherein the reference values stored in the memory (3011) are values set according to a type of the brush device (2000) and whether the vacuum cleaner (100) operates.

9. A self-diagnosis method of a vacuum cleaner (100) comprising a cleaner body (1000) and a brush device (2000) connected to the cleaner body (1000), the self-diagnosis method comprising:
determining, by at least one processor (3012) of the cleaner body (1000), whether a state of the vacuum cleaner (100) is a no-load state;
when the state of the vacuum cleaner (100) is determined as the no-load state, detecting, by the at least one processor (3012), a pressure value in a flow path of the vacuum cleaner (100), based on a pressure sensor (1400) mounted to a portion of a suction duct (40) of the cleaner body (1000);
detecting, by the at least one processor (3012), data related to a load of the brush device (2000);
comparing, by the at least one processor (3012), the detected pressure value in the flow path of the vacuum cleaner (100) and the data related to the load of the brush device (2000) with reference values stored in a memory (3011) comprised in the cleaner body (1000);
diagnosing, by the at least one processor (3012), the state of the vacuum cleaner (100), based on a result of the comparing; and
outputting, by the at least one processor (3012), diagnosis result information about the diagnosing via a user interface (1700) comprised in the cleaner body (1000).

10. The self-diagnosis method of claim 9, wherein the determining of whether the state of the vacuum cleaner (100) is the no-load state comprises determining the state of the vacuum cleaner (100) as the no-load state, when a state in which the brush device (2000) is not affected by a cleaning-target surface is detected.

11. The self-diagnosis method of claim 9 or 10, wherein the detecting of the pressure value in the flow path of the vacuum cleaner (100) comprises:
obtaining a first pressure value from the pressure sensor (1400) before the vacuum cleaner (100) operates;
obtaining a second pressure value from the pressure sensor (1400) after the vacuum cleaner (100) operates with preset power consumption; and
detecting a difference between the first pressure value and the second pressure value as the pressure value in the flow path of the vacuum cleaner (100).

12. The self-diagnosis method of any one of claims 9 to 11, wherein the detecting of the data related to the load of the brush device (2000) comprises detecting a current value of a motor comprised in the brush device (2000) by using a load detection sensor (1134) comprised in the cleaner body (1000).

13. The self-diagnosis method of any one of claims 9 to 11, wherein the pressure sensor (1400) is located at at least one of an end of a straight portion of the suction duct (40) or a knee point between the straight portion and a curved portion of the suction duct (40).

14. The self-diagnosis method of any one of claims 9 to 13, wherein a diagnosis item for the state of the vacuum cleaner (100), based on the pressure value in the flow path of the vacuum cleaner (100) is different from a diagnosis item for the state of the vacuum cleaner 100, based on the data related to the load of the brush device (2000).

15. The self-diagnosis method of any one of claims 9 to 14, wherein the reference values stored in the memory (3011) are values set according to a type of the brush device (2000) and whether the vacuum cleaner (100) operates.
